# EUROPEAN PATENT APPLICATION

(11) **EP 4 738 072 A1**
(43) Date of publication of application: **06.05.2026**
(21) Application number: 24845864.8
(22) Date of filing: 08.07.2024
(51) Int. Cl.: G06F 3/01, G06F 3/00, G06F 3/04842, G06V 40/20

(54) **METHOD FOR USING REAL-WORLD OBJECT AS INPUT TOOL, AND ELECTRONIC DEVICE FOR CARRYING OUT SAME**

(30) Priority: 26.07.2023 KR 20230097799
(71) Applicant: Samsung Electronics Co., Ltd., Suwon-si, Gyeonggi-do 16677 (KR)
(72) Inventor: KO, Jaewoo, Suwon-si, Gyeonggi-do 16677 (KR); RYU, Daeho, Suwon-si, Gyeonggi-do 16677 (KR); KIM, Jeongwon, Suwon-si, Gyeonggi-do 16677 (KR); SOHN, Junil, Suwon-si, Gyeonggi-do 16677 (KR); YI, Sanghyun, Suwon-si, Gyeonggi-do 16677 (KR); CHO, Sungwoo, Suwon-si, Gyeonggi-do 16677 (KR)
(74) Representative: Appleyard Lees IP LLP
(86) International application number: PCT/KR2024/009681
(87) International publication number: WO 2025/023560

(57) **Abstract**

Provided is a method of using a real object as an input tool and an electronic device for performing the method. The electronic device comprises a camera for obtaining an image by photographing a real object and a user's hand in a real space, memory storing at least one instruction, and at least one processor configured to execute at least one instruction stored in the memory, wherein the at least one processor is configured to recognize a real object interacting with a user's hand from an obtained image, identify a pre-registered function which uses the recognized real object as an input tool, and perform the identified pre-registered function.

## Description

### Technical Field

The present disclosure relates to an electronic device for using a real-world object as an input tool and method thereof. More particularly, the present disclosure relates to an electronic device for detecting a real-world object that is not in communication with the electronic device and performing a predetermined function according to a result of the detecting and method thereof.

### Background Art

Augmented reality (AR) is a technology for showing a virtual image by overlaying it on a physical environment space of a real world or a real-world object, and virtual reality (VR) is a technology for interacting with a non-existent virtual object or showing the virtual object independently in a virtual environment. Recently, AR devices (e.g., smart glasses) or VR devices that use the AR and VR technologies are being usefully used in daily life for e.g., information search, directions, camera shooting, games, etc.

As touch operation is not possible, by nature, on the AR devices or VR devices, signal transmission and reception through the user's hand gesture or through a paired electronic device as an input means is used as an input interface to provide a service.

### Disclosure of Invention

### Solution to Problem

In an embodiment of the present disclosure, an electronic device may be provided. The electronic device may include a camera for obtaining an image by photographing a real-world object (hereinafter, also referred to as a real object) and a user's hand in a real space. The electronic device may include memory storing at least one instruction. The electronic device may include at least one processor configured to execute the at least one instruction stored in the memory. The at least one processor may recognize the real object interacting with the user's hand from the obtained image. The at least one processor may identify a pre-registered function which uses the recognized real object as an input tool. The at least one processor may perform the identified pre-registered function.

In an embodiment of the present disclosure, a method of using a real object as an input tool of an electronic device may be provided. The method may include obtaining an image by photographing a real object and a user's hand in a real space. The method may include recognizing the real object interacting with the user's hand from the obtained image. The method may include identifying a pre-registered function which uses the recognized real object as an input tool. The method may include performing the identified pre-registered function.

In an embodiment of the disclosure, a computer-readable recording medium having a program recorded thereon to cause a computer to perform the method of using a real object as an input tool of an electronic device.

In an embodiment of the present disclosure, an electronic device may be provided. The electronic device may include a camera for obtaining an image by photographing a real object in a real space. The electronic device may include memory storing at least one instruction. The electronic device may include at least one processor configured to execute the at least one instruction stored in the memory. The at least one processor may recognize the real object from the obtained image. The at least one processor may register the recognized real object as an input tool. The at least one processor may map an interaction between the registered real object and a user's hand to a predefined function.

### Brief Description of Drawings

The present disclosure may be readily understood by combinations of the following detailed descriptions and the accompanying drawings, and reference numerals refer to structural elements.
FIG. 1 is a conceptual diagram for describing an operation of using a real-world object (hereinafter, referred to as a real object) as an input tool of an electronic device, according to an embodiment of the present disclosure.
FIG. 2 is a block diagram showing components of an electronic device, according to an embodiment of the present disclosure.
FIG. 3 is a flowchart showing a method of using a real object as an input tool of an electronic device, according to an embodiment of the present disclosure.
FIG. 4A is a conceptual diagram for describing an operation of generating or deleting a virtual object by using a real object, according to an embodiment of the present disclosure.
FIG. 4B is a conceptual diagram for describing an operation of generating or deleting a virtual object by using a real object, according to an embodiment of the present disclosure.
FIG. 5A is a conceptual diagram for describing an operation of generating or deleting a virtual object by using a real object, according to an embodiment of the present disclosure.
FIG. 5B is a conceptual diagram for describing an operation of generating or deleting a virtual object by using a real object, according to an embodiment of the present disclosure.
FIG. 6 is a conceptual diagram for describing an operation of determining a color of a virtual object based on a color of at least a portion of a real object used as an input tool, according to an embodiment of the present disclosure.
FIG. 7 is a conceptual diagram for describing an operation of determining a color of a virtual object based on a color of a target object indicated by a real object, according to an embodiment of the present disclosure.
FIG. 8 is a conceptual diagram for describing an operation of determining a color of a virtual object based on a shape of a virtual object, according to an embodiment of the present disclosure.
FIG. 9 is a conceptual diagram for describing an operation of determining a size of a virtual object based on a size of at least a portion of a real object, according to an embodiment of the present disclosure.
FIG. 10 is a flowchart showing a method of performing a function for generating or deleting a virtual object by tracing at least a portion of a real object, according to an embodiment of the present disclosure.
FIG. 11 is a flowchart showing a method of determining at least one of a color and a size of a virtual object based on at least one of a color and a size of at least a portion of a real object, according to an embodiment of the present disclosure.
FIG. 12 is a flowchart showing a method of determining a color, a shape and a form of a virtual object based on a color, a shape and a form of a target object indicated by a real object, according to an embodiment of the present disclosure.
FIG. 13 is a flowchart showing a method of obtaining an image in which a virtual object is synthesized on a real image, according to an embodiment of the present disclosure.
FIG. 14A is a conceptual diagram for describing an operation of identifying a pre-registered function based on an occluded portion of a real object, according to an embodiment of the present disclosure.
FIG. 14B is a conceptual diagram for describing an operation of identifying a pre-registered function based on an occluded portion of a real object, according to an embodiment of the present disclosure.
FIG. 14C is a conceptual diagram for describing an operation of identifying a pre-registered function based on an occluded portion of a real object, according to an embodiment of the present disclosure.
FIG. 14D is a conceptual diagram for describing an operation of identifying a pre-registered function based on an occluded portion of a real object, according to an embodiment of the present disclosure.
FIG. 15 is a flowchart showing a method of identifying a pre-registered function based on an occluded portion of a real object, according to an embodiment of the present disclosure.
FIG. 16 is a conceptual diagram for describing an operation of identifying a pre-registered function based on a way that a user's hand is gripping a real object, according to an embodiment of the present disclosure.
FIG. 17 is a flowchart showing a method of identifying a pre-registered function based on a way that a user's hand is gripping a real object, according to an embodiment of the present disclosure.
FIG. 18 is a flowchart showing a method of identifying a pre-registered function based on a way that a user's hand is gripping a real object, according to an embodiment of the present disclosure.
FIG. 19 is a flowchart showing a method of identifying a pre-registered function based on a way that a user's hand is gripping a real object, according to an embodiment of the present disclosure.
FIG. 20 is a flowchart showing a method of determining whether to perform a pre-registered function depending on a distance between a user's hand and a real object, according to an embodiment of the present disclosure.
FIG. 21 is a conceptual diagram for describing an operation of performing a function for determining a performance value of a virtual object according to a characteristic of a real object, according to an embodiment of the present disclosure.
FIG. 22 is a flowchart showing a method of determining a performance value of a virtual object according to a characteristic of a real object, according to an embodiment of the present disclosure.
FIG. 23 is a conceptual diagram for describing an operation of using a real object similar to a virtual object to be mapped as an input tool, according to an embodiment of the present disclosure.
FIG. 24 is a conceptual diagram for describing an operation of generating a virtual object based on a predetermined motion, according to an embodiment of the present disclosure.
FIG. 25 is a conceptual diagram for describing an operation of generating a virtual object based on a predetermined motion, according to an embodiment of the present disclosure.
FIG. 26 is a flowchart showing a method of generating a virtual object based on a predetermined motion, according to an embodiment of the present disclosure.
FIG. 27 is a conceptual diagram for describing an operation of generating a virtual object based on a predetermined motion and a personal authentication input, according to an embodiment of the present disclosure.
FIG. 28 is a flowchart showing a method of generating a virtual object based on a predetermined motion and a personal authentication input, according to an embodiment of the present disclosure.
FIG. 29 is a conceptual diagram for describing an operation of performing a function for activating a predetermined sensor based on a detection result, according to an embodiment of the present disclosure.
FIG. 30 is a block diagram for describing operations of an electronic device, according to an embodiment of the present disclosure.
FIG. 31 is a flowchart showing a method of performing a function for activating a predetermined sensor, according to an embodiment of the present disclosure.
FIG. 32 is a flowchart showing a method of registering a real object as an input tool of an electronic device, according to an embodiment of the present disclosure.
FIG. 33 is a conceptual diagram for describing a method of performing a pre-registered function based on a motion of a user's cheek or a shape of the user's cheek, according to an embodiment of the present disclosure.
FIG. 34A is a conceptual diagram for describing a method of performing a function for controlling a virtual object based on a motion of a user's cheek or a shape of the user's cheek, according to an embodiment of the present disclosure.
FIG. 34B is a conceptual diagram for describing a method of performing a function for controlling a virtual object based on a motion of a user's cheek or a shape of the user's cheek, according to an embodiment of the present disclosure.
FIG. 35A is a conceptual diagram for describing a method of performing a function for controlling the size of a virtual screen based on a motion of a user's cheek or a shape of the user's cheek, according to an embodiment of the present disclosure.
FIG. 35B is a conceptual diagram for describing a method of performing a function for controlling the size of a virtual object based on a motion of a user's cheek or a shape of the user's cheek, according to an embodiment of the present disclosure.
FIG. 36A is a conceptual diagram for describing a method of performing a pre-identified function or a function for undoing the performed function based on a motion of a user's cheek or a shape of the user's cheek, according to an embodiment of the present disclosure.
FIG. 36B is a conceptual diagram for describing a method of performing a pre-identified function or a function for undoing the performed function based on a motion of a user's cheek or a shape of the user's cheek, according to an embodiment of the present disclosure.
FIG. 37 is a flowchart showing a method of identifying a pre-registered function based on a distance between a real object and a user's mouth, according to an embodiment of the present disclosure.
FIG. 38 is a flowchart showing a method of performing a pre-registered function based on a motion of a user's cheek or a shape of the user's cheek, according to an embodiment of the present disclosure.

### Mode of the Invention

Terms are selected from among common terms widely used at present, taking into account principles of the present disclosure, which may however depend on intentions of those of ordinary skill in the art, judicial precedents, emergence of new technologies, and the like. Some terms as herein used are selected at the applicant's discretion, in which case, the terms will be explained later in detail in connection with embodiments of the present disclosure. Therefore, the terms should be defined based on their meanings and descriptions throughout the present disclosure.

As used herein, the singular forms "a", "an" and "the" are intended to include the plural forms as well, unless the context clearly indicates otherwise. All terms including technical and scientific terms used herein have the same meaning as commonly understood by one of ordinary skill in the art to which this disclosure belongs.

The term "include (or including)" or "comprise (or comprising)" is inclusive or open-ended and does not exclude additional, unrecited elements or method steps. The terms "unit", "module", "block", etc., as used herein each represent a unit for handling at least one function or operation, and may be implemented in hardware, software, or a combination thereof.

In the disclosure, the expression "configured to" as herein used may be interchangeably used with "suitable for", "having the capacity to", "designed to", "adapted to", "made to", or "capable of" according to the given situation. The expression "configured to" may not necessarily mean "specifically designed to" in terms of hardware. For example, in some situations, an expression "a system configured to do something" may refer to "an entity able to do something in cooperation with" another device or parts. For example, "a processor configured to perform A, B and C functions" may refer to a dedicated processor, e.g., an embedded processor for performing A, B and C functions, or a general-purpose processor, e.g., a Central Processing Unit (CPU) or an application processor that may perform A, B and C functions by executing one or more software programs stored in a memory.

When the term "connected" or "coupled" is used, a component may be directly connected or coupled to another component. However, unless otherwise defined, it is also understood that the component may be indirectly connected or coupled to the other component via another new component.

In the present disclosure, "augmented reality (AR)" may refer to showing a virtual object (or virtual image) in a physical environment space or showing both a real object and a virtual object (or virtual image) in real world.

In the present disclosure, "virtual augmented reality (VR)" may refer to interacting with an actually non-existent virtual object (or virtual image) or showing a virtual object (or virtual image) independently in a virtual environment.

In the present disclosure, "AR device" or "VR device" may refer to a device that is able to express AR or VR. For example, the AR device or the VR device may include AR glasses shaped like eyeglasses to be worn by the user in his/her eye area, a head mounted display apparatus (HMD) to be worn in a head area, an AR helmet, or the like.

In the present disclosure, functions related to artificial intelligence (AI) are operated through a processor and memory. The processor may be configured with one or more processors. The one or more processors may include a generic-purpose processor such as a CPU, an AP, a digital signal processor (DSP), etc., a dedicated graphic-processors such as a GPU and a vision processing unit (VPU), or a dedicated Al processor such as an NPU. The one or more processors may control processing of input data according to a predefined operation rule or an Al model stored in the memory. In a case that the one or more processors are the dedicated Al processors, the dedicated Al processors may be designed in a hardware structure that is specific to dealing with a particular Al model.

The predefined operation rule or the AI model is characterized by being made by learning. Specifically, the Al model being made by learning refers to the predefined operation rule or the Al model established to perform a desired feature (or object) being made when a basic Al model is trained by a learning algorithm with a lot of training data. Such learning may be performed by a device itself in which Al is performed according to the disclosure, or by a separate server and/or system. Examples of the learning algorithm may include supervised learning, unsupervised learning, semi-supervised learning, or reinforcement learning, without being limited thereto.

In the present disclosure, the Al model may be made up of a plurality of neural network layers. Each of the plurality of neural network layers may have a plurality of weight values, and perform neural network operation through operation between an operation result of the previous layer and the plurality of weight values. The plurality of weight values owned by the plurality of neural network layers may be optimized by learning results of the Al model. For example, the plurality of weight values may be updated to reduce or minimize a loss value or a cost value obtained by the Al model during a training procedure. The artificial neural network model may include a deep neural network (DNN), for example, a convolutional neural network (CNN), a recurrent neural network (RNN), a restricted Boltzmann machine (RBM), a deep belief network (DBN), a bidirectional recurrent deep neural network (BRDNN), or a deep Q-network, without being limited thereto.

In the present disclosure, "object recognition" may refer to image signal processing that inputs an image to an Al model and detects an object from the input image, tracks the object, classifies the object into a certain category or segments the object through inference using the Al model. In an embodiment of the present disclosure, the object recognition may refer to image processing that, by using an Al model, detects an object from an image taken through a camera, segments the object, tracks the object, and obtains position information of a plurality of key points (e.g., joints) included in the object.

In the present disclosure, the object detection may refer to a task that, by using an Al model, identifies a position and edges of a certain object in an image or video and distinguishes the object from other background.

In the present disclosure, "object tracking" may refer to a task that, by using an Al model, keeps detecting the motion of a certain object in a video, identifies and tracks the object in time.

In the present disclosure, "object segmentation" may refer to a task that, by using an Al model, distinguishes a plurality of objects (or a plurality of portions of one object) on a pixel basis in an image or video and extracts edges of each object (or each portion).

In the present disclosure, "object classification" may refer to a task that, by using an Al model, identifies a type or category of an object in an image or video and classifies the object into a predefined class or category.

In the present disclosure, "object pose estimation" may refer to a task that, by using an Al model, estimates pose information regarding a position and motion of an object in an image or video. For example, the object pose estimation may refer to a task of identifying the frame or a keypoint of a certain object to infer and estimate a motion of the object such as a position, direction, joints, etc. In the present disclosure, the joint is a part of a human body which connects bones, referring to one or more portions belonging to a hand such as a finger, a wrist, a palm, etc., as well as an upper body such as a neck, an arm, a shoulder, etc.

An embodiment of the present disclosure will now be described in detail with reference to accompanying drawings so as to be readily practiced by those of ordinary skill in the art. However, the embodiments of the disclosure may be implemented in many different forms, and not limited thereto as will be discussed herein.

Embodiments of the disclosure will now be described in detail with reference to accompanying drawings.

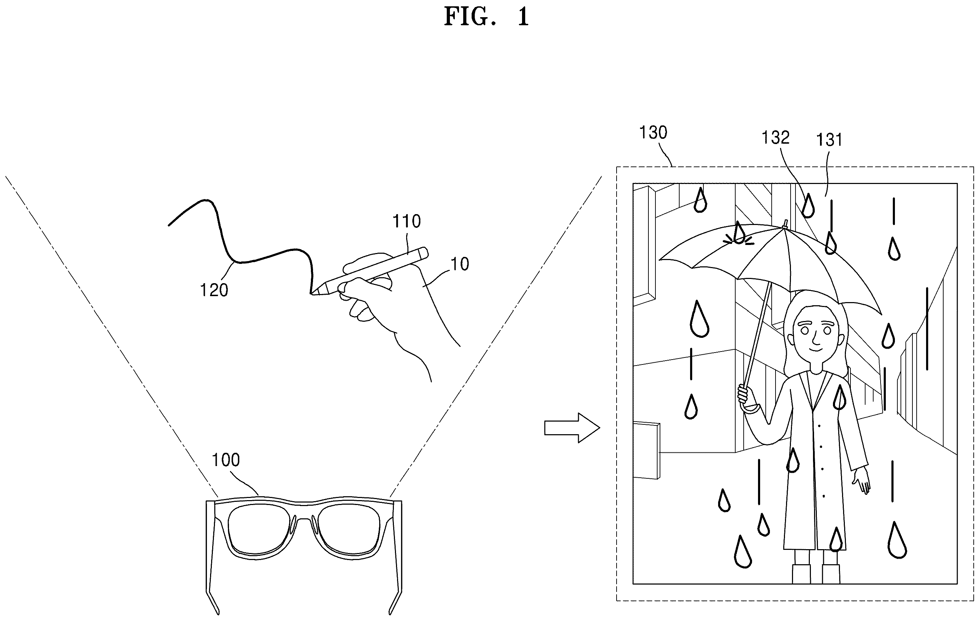

FIG. 1 is a conceptual diagram for describing an operation of using a real object as an input tool of an electronic device, according to an embodiment of the present disclosure.

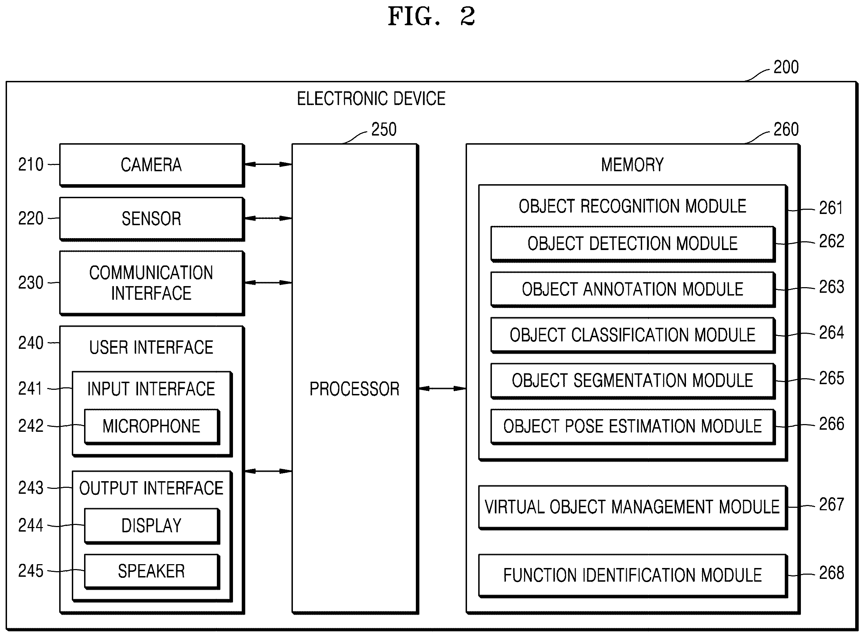

Referring to FIG. 1, the electronic device 100 may include a camera. The present disclosure is not, however, limited thereto, and a function of the camera may be performed by an external device. The electronic device 100 may obtain at least one image or video including a real object 110 through the camera, use the real object 110 as an input tool of the electronic device 100, and perform a preset function by using the real object 110. For example, the electronic device 100 may include an AR device, a VR device, a smart TV, a smart phone, a tablet PC, a laptop PC, etc., but is not limited thereto. Although the electronic device 100 is depicted as an AR device or a VR device in FIG. 1, it is not limited thereto. For convenience of explanation, it will now be assumed that the electronic device 100 is an AR device or a VR device. Components of the electronic device 100 will be described in detail in connection with FIG. 2.

In an embodiment of the present disclosure, the camera of the electronic device 100 may obtain at least one image or video by photographing (or capturing) a real object and a hand 10 of the user in real space. The electronic device 100 may detect the real object 110 through object recognition. The electronic device 100 may perform a preset function based on a result of the detecting corresponding to the real object 110.

In an embodiment of the present disclosure, the real object 110 may include any physical object existent in real-world, which is not in communication with or not paired with the electronic device 100. The real object 110 may not have a function related to communication and connection with the electronic device 100. For example, the real object 110 may not have a function for transmitting or receiving an electric signal. For example, the real object 110 may not support a protocol for data exchange or connection with the electronic device 100.

In an embodiment of the present disclosure, the real object 110 may communicate with the electronic device 100, but the real object 110 may not perform exchanging data with the electronic device 100 in the process of performing the method according to an embodiment of the present disclosure.

In an embodiment of the present disclosure, the real object 110 is a concept that encompasses physical things having various shapes and sizes. For example, the real object 110 may be an object of a size that may be held by the user's hand (e.g., a cup, a container, a cup holder, a pen, a pencil, a board marker, a hammer, a driver, a saw, a drill, fruit, grains, a watch, a necklace, a wallet, glasses, a sports item, a book, a toy, an electronic product, furniture, etc.), but the present disclosure is not limited thereto.

In an embodiment of the present disclosure, the electronic device 100 may recognize a real object interacting with the hand 10 of the user from the obtained image. For example, the interaction between the hand 10 of the user and the real object may refer to a situation in which the hand 10 of the user is gripping, holding, touching or moving the real object. For example, the interaction between the hand 10 of the user and the real object may refer to a situation in which the hand 10 of the user is getting closer to or away from the real object. The interaction between the hand 10 of the user and the real object is not, however, limited to the aforementioned example.

In an embodiment of the present disclosure, the electronic device 100 may detect the real object 110 and the hand 10 of the user from a video or at least one image. For example, the electronic device 100 may detect the real object 110 and the hand 10 of the user by using an object detection model. For example, based on the detected hand 10 of the user and the detected real object, the electronic device 100 may recognize the real object interacting with the hand 10 of the user.

In an embodiment of the present disclosure, the electronic device 100 may track the real object 110 or at least a portion of the real object 110. For example, the electronic device 100 may track the at least a portion of the real object 110 by using the object detection model. For example, the electronic device 100 may track a portion (e.g., a pencil tip) on one side of the real object 110 (e.g., a pencil).

In an embodiment of the present disclosure, the electronic device 100 may generate a virtual object 120 based on a motion of the tracked real object 110. For example, the electronic device 100 may generate a virtual object 120 based on the motion and position of the portion (e.g., a pencil tip) on one side of the real object 110 (e.g., a pencil).

In an embodiment of the disclosure, the electronic device 100 may include a display. The electronic device 100 may display the virtual object 120 on the display.

In an embodiment of the present disclosure, the electronic device 100 may synthesize a virtual object 132 on a real image 131. For example, the virtual object 132 may be generated based on results of detecting and tracking the real object 110. The electronic device 100 may display a synthesized image 130 on the display. The synthesizing may include combining the real image 131 and the virtual object 132 so that the virtual object 132 overlaps in a partial area of the real image 131.

FIG. 2 is a block diagram showing components of an electronic device 200, according to an embodiment of the disclosure. A configuration, operation and function of the electronic device 200 may correspond to the configuration, operation and function of the electronic device 100 of FIG. 1. For convenience of explanation, redundant descriptions overlapping what are described in FIG. 1 will be omitted.

Referring to FIG. 2, the electronic device 200 according to an embodiment of the present disclosure may include a camera 210, a sensor 220, a communication interface 230, a user interface 240, a processor 250 and a memory 260. However, the components depicted in FIG. 2 are not essential elements, and the electronic device 200 may dispense with some of the components depicted in FIG. 2 or further include an additional component. For example, unlike what is depicted in FIG. 2, the electronic device 200 according to an embodiment of the present disclosure may dispense with at least one of the camera 210 and the sensor 220.

In an embodiment of the present disclosure, the electronic device 200 may be implemented as a portable device, in which case, the electronic device 200 may further include a battery for supplying power to the camera 210, the sensor 220, the communication interface 230, the user interface 240, the processor 250 and the memory 260.

The camera 210 may obtain at least one image or video regarding a real object by photographing (or capturing) the real object (e.g., the real object 110 of FIG. 1) in real space. In an embodiment of the present disclosure, the camera 210 may obtain a two dimensional (2D) image including the hand 10 of the user by photographing (or capturing) the hand 10 of the user gripping a real object.

In an embodiment of the present disclosure, the camera 210 may include at least two cameras. For example, the camera 210 may include a first camera and a second camera. For example, the first camera may correspond to the left eye and the second camera may correspond to the right eye, but the present disclosure is not limited thereto. The first camera and the second camera may constitute a stereo camera for obtaining three dimensional (3D) location coordinates of an object through triangulation based on a positional relationship between the cameras and a 2D image obtained from an area where the respective field of views overlap.

In an embodiment of the present disclosure, the camera 210 may be implemented as a small form factor to be mounted on a VR device or an AR device, and may be a light-weighted RGB camera that consumes low power. It is not, however, limited thereto, and in an embodiment of the present disclosure, the camera 210 may be implemented as any type of well-known cameras such as an RGB-depth camera including a depth estimation function, a stereo fish-eye camera, a gray-scale camera or an infrared camera.

In an embodiment of the present disclosure, the camera 210 may include a lens module, an image sensor and an image processing module. The camera 210 may obtain a still image or a video about a real object and the hand 10 of the user through the image sensor (e.g., CMOS or CCD). The video may include a plurality of image frames obtained in real time by photographing a real scene (or real space) including the real object and the hand 10 of the user through the camera 210. The image processing module may encode a still image having a single image frame or video data comprised of a plurality of image frames obtained through the image sensor.

The sensor 220 may measure or detect a physical quantity and convert the measured or detected information to an electric signal. The sensor 220 may send the converted electric signal to the processor 250. The processor 250 may generate sensor data by processing the electric signal. For example, the sensor 220 may include at least one of at least one button for touch input, a microphone sensor, a gesture sensor, a gyroscope, a gyro sensor, an atmospheric sensor, a magnetic sensor, a magnetometer, an acceleration sensor, an accelerator, a grip sensor, a proximity sensor, an RGB sensor, a biophysical sensor, a temperature sensor, a humidity sensor, an illumination sensor, an ultraviolet sensor, an electromyographic sensor, a brainwave sensor, an electrocardiogram sensor, an infrared sensor, an ultrasound sensor, an iris sensor or a fingerprint sensor, but the present disclosure is not limited thereto.

In an embodiment of the present disclosure, the electronic device 200 may activate the sensor 220 based on a detection result corresponding to the real object and the hand 10 of the user. The electronic device 200 may obtain sensor data by using the activated sensor 220. In an embodiment of the present disclosure, the electronic device 200 may modulate the sensor data based on at least some of the form, shape, color, texture and function of the real object.

The communication interface 230 may support establishment of a wired or wireless communication channel between the electronic device 200 and an external electronic device (not shown) or server (not shown) and communication through the established communication channel. In an embodiment, the communication interface 230 may receive data from an external electronic device (not shown) or server (not shown) through wired or wireless communication or transmit data to an external electronic device (not shown) or server (not shown).

In an embodiment of the present disclosure, the communication interface 230 may include a wireless communication module (e.g., a cellular communication module, a short-range communication module, or a global navigation system (GNSS) communication module) or a wired communication module (e.g., a local area network (LAN) communication module or a power line communication module), and use one of the communication modules to communicate with an external electronic device (not shown) or server (not shown) over at least one network, e.g., a short-range communication network (e.g., Bluetooth, Wi-Fi direct, or infrared data association (IrDA)) or a long-range communication network (e.g., a cellular network, the Internet, or a computer network (e.g., a LAN or WAN)).

The user interface 240 may include an input interface 241 and an output interface 243.

The input interface 241 is to receive an input from the user (hereinafter, a user input) The input interface 241 may be at least one of a key pad, a dome switch, a (capacitive, resistive, infrared detection type, surface acoustic wave type, integral strain gauge type, piezoelectric effect type) touch pad, a jog wheel or a jog switch, but is not limited thereto.

In an embodiment of the present disclosure, the input interface 241 may include a microphone 242. Although the microphone 242 and the sensor 220 are depicted in separate blocks in FIG. 2, the sensor 220 may include the microphone 242. In an embodiment of the present disclosure, the microphone 242 may receive sound. For example, the microphone 242 may receive the user's voice. The microphone 242 may convert the user's voice to an audio signal which is an electric signal.

In an embodiment of the present disclosure, the electronic device 200 may activate the microphone 242 based on a detection result corresponding to the real object and the hand 10 of the user. The electronic device 200 may obtain an audio signal corresponding to the user's voice by using the activated microphone 242. In an embodiment of the present disclosure, the electronic device 200 may modulate the audio signal based on at least some of the form, shape, color, texture and function of the real object.

The output interface 243 is for outputting audio or video signals, and may include, for example, a display 244 and a speaker 245.

In an embodiment of the present disclosure, the electronic device 200 may display an image or video through the display 244. For example, the electronic device 200 may display a virtual image including a virtual object through the display 244. For example, the electronic device 200 may display an image in which a virtual object is synthesized on an image corresponding to a real scene through the display 244. For example, the display 244 may include at least one of a liquid crystal display (LCD), a thin film transistor-liquid crystal display (TFT-LCD), light emitting diodes (LEDs), organic LEDs (OLEDs), a flexible display, a 3D display, or an electrophoretic display. Depending on the form of the implementation, the electronic device 200 may include two or more displays.

In an embodiment of the present disclosure, the electronic device 200 may display at least one image or video regarding a real world obtained by the camera 210 on the display 244 in real time. For example, the at least one image or video regarding the real world may include at least one image frame obtained in real time by photographing (or capturing) a real scene (or real space) including the real object 110 and the hand 10 of the user through the camera 210. The electronic device 200 may overlap and display at least one virtual object on the at least one image or video regarding the real world on the display 244. For example, the electronic device 200 may overlap and display the virtual object 120 on the video regarding the real world including the real object 110 and the hand 10 of the user on the display 244. The speaker 245 may output an audio signal received from the communication interface 230 or stored in the memory 260.

The processor 250 may be implemented by a combination of software and a generic-purpose processor such as an application processor (AP), a central processing unit (CPU) or a graphic processing unit (GPU). In the case of the dedicated processor, it may include a memory for implementing an embodiment of the disclosure or a memory processor for using an external memory.

The processor 250 may include one or more processors. In this case, it may be implemented by a combination of dedicated processors or implemented by a combination of software and a plurality of generic-purpose processors such as APs, CPUs or GPUs.

In an embodiment, the processor 250 may be equipped with an Al processor. The Al processor may be manufactured into the form of a dedicated hardware chip for AI, or manufactured as a portion of the existing generic-purpose processor (e.g., a CPU or an AP) or GPU and mounted in the electronic device 200. For example, the Al processor may perform data processing required for training and/or inference related to at least one Al model.

Functions related to Al according to the present disclosure are operated through the processor 250 and the memory 260. The processor 250 may include one or more processors. The one or more processors may include a generic-purpose processor such as a CPU, an AP, a digital signal processor (DSP), etc., a dedicated graphic processor such as a GPU and a vision processing unit (VPU), or a dedicated Al processor such as an NPU. The one or more processors may control processing of input data according to a predefined operation rule or an AI model (e.g., deep neural network model) stored in the memory 260. In a case that the one or more processors are the dedicated Al processors, they may be designed in a hardware structure that is specific to dealing with a particular Al model.

The predefined operation rule or the Al model may be made by learning. Specifically, the Al model being made by learning refers to the predefined operation rule or the Al model established to perform a desired feature (or object) being made when a basic Al model is trained by a learning algorithm with a lot of training data. Such learning may be performed by a device itself in which Al is performed according to the disclosure, or by a separate server and/or system. Examples of the learning algorithm may include supervised learning, unsupervised learning, semi-supervised learning, or reinforcement learning, without being limited thereto. The memory 260 may store a program for processing and controlling the processor 250 and also store input/output data. The memory 260 may also store at least one Al model.

The memory 260 may include at least one type of storage medium including a flash memory, a hard disk, a multimedia card micro type memory, a card type memory (e.g., secure digital (SD) or extreme digital (XD) memory), a random access memory (RAM), a static RAM (SRAM), a read only memory (ROM), an electrically erasable programmable ROM (EEPROM), a programmable ROM (PROM), a magnetic memory, a magnetic disk, and an optical disk. Furthermore, the electronic device 200 may operate a web storage or a cloud server that performs a storage function on the Internet.

In an embodiment of the present disclosure, the memory 260 may store data, firmware, software and process codes processed or scheduled to be processed by the processor 250. In an embodiment of the present disclosure, the memory 260 may store data and program codes corresponding to at least one of an object recognition module 261, an object detection module 262, an object tracking module 263, an object classification module 264, an object segmentation module 265, an object pose estimation module 266, a virtual object management module 267 and a function identification module 268.

In an embodiment of the present disclosure, the object recognition module 261 may include the object detection module 262, the object tracking module 263, the object classification module 264, the object segmentation module 265 and the object pose estimation module 266. The object recognition module 261 may output data corresponding to an object included in the image by using at least one AI model having an image or video as an input.

In an embodiment of the present disclosure, the object detection module 262 may detect an object included in the at least one image by using the Al model (also referred to as an object detection model) having at least one image as an input. The object detection module 262 may estimate position information and outline information of the detected object. For example, the object detection module 262 may receive an image including a real object and the hand 10 of the user. The object detection module 262 may estimate position information and outline information of each of the real object and the hand 10 of the user by using an Al model having an input of an image. In the present disclosure, the detection result may include values including the position information and outline information. For example, the position information may indicate where an object is in the image or video frame. For example, the outline information may indicate a boundary line or outlines of the object in the image or video frame. In an embodiment of the present disclosure, the object detection module 262 may recognize a real object interacting with the hand 10 of the user based on the detection result.

In an embodiment of the present disclosure, the object tracking module 263 may track the motion of an object (or a portion of the object) included in a video by using an Al model (also referred to as an object tracking model) having at least one image as an input. The object tracking module 263 may estimate consecutive position information and motion patterns of the object. For example, the object detection module 262 may receive a video or a consecutive image sequence including a real object. The object detection module 262 may estimate consecutive position information and motion pattern of at least a portion of the real object by using an Al model having an input of a video or consecutive image sequence. In the present disclosure, a tracking result may include values including the consecutive position information and motion pattern.

In an embodiment of the present disclosure, the object classification module 264 may classify at least one object included in the at least one image into predefined classes by using the Al model (also referred to as an object classification model) having at least one image as an input. The object classification module 264 may estimate a class label of an object. For example, the object classification module 264 may receive at least one image including a real object. The object classification module 264 may classify the real object into a predefined class by using the AI model having at least one image as an input.

In an embodiment of the present disclosure, the object segmentation module 265 may divide the image into a plurality of objects or a plurality of portions of one object by using an Al model (also referred to as an object segmentation model) having at least one image as an input. The object segmentation module 265 may estimate outline and area information of the plurality of objects or a plurality of portions of one object. For example, the object segmentation module 265 may receive at least one image including a real object. The object segmentation module 265 may divide the real object into a plurality of portions by using the Al model having at least one image as an input.

In an embodiment of the present disclosure, the object pose estimation module 266 may estimate pose information such as a pose, a direction, joints, etc., of an object included in the at least one image by using an Al model (also referred to as an object pose estimation model) having at least one image as an input. The object pose estimation module 266 may identify a keypoint of an object, and infer a pose and movement of the object and motion of its joint. For example, the object pose estimation module 266 may receive at least one image including the hand 10 of the user that grips the real object. The object segmentation module 265 may use the Al model having at least one image as an input to infer a position, a direction, a manner, etc., in which the hand 10 of the user grips the real object.

In an embodiment of the present disclosure, the virtual object management module 267 may perform a function for generating or deleting a virtual object. The virtual object management module 267 may generate or delete a virtual object according to the identified function of the electronic device 200. For example, with a first function, the electronic device 200 may generate a virtual object according to a result of tracking the real object. For example, with a second function, the electronic device 200 may delete the virtual object according to a result of tracking the real object.

In an embodiment of the present disclosure, the function identification module 268 may identify a pre-registered function of the electronic device 200 that uses the real object as an input tool based on the object recognition result of the object recognition module 261. For example, the pre-registered function may include a function for generating a virtual object, a function for deleting the virtual object, a function for changing a characteristic of the virtual object, etc.

In an embodiment of the present disclosure, at least a portion of at least one of the object recognition module 261, the object detection module 262, the object tracking module 263, the object classification module 264, the object segmentation module 265, the object pose estimation module 266, the virtual object management module 267 and the function identification module 268 may be executed by the processor 250, but the present disclosure is not limited thereto and the functions may be performed by an external server (not shown).

In an embodiment of the present disclosure, the electronic device 200 may be an AR device or a VR device. The AR device or the VR device may be implemented in a type of glasses worn on the human face or by a head-mounted device worn on the human head, and may be designed as a small form factor for portability. Hence, the storage capacity of the memory 260 and the computation processing rate of the processor 250 of the AR device or the VR device may be limited as compared to a server (not shown). Accordingly, the server (not shown) may transmit required data (e.g., detection results, tracking results, etc.) to the AR device or the VR device over a communication network after performing an operation that requires storage of a large volume of data and large-scale computation. In this way, the AR device or the VR device may receive and use data (e.g., position information and edge information, consecutive position information, motion pattern information, etc., of an object) corresponding to the detection result or tracking result from the server (not shown) even without a large volume memory and a processor having a rapid computation capability, thereby reducing a processing time taken to process an image and implementing real-time object recognition.

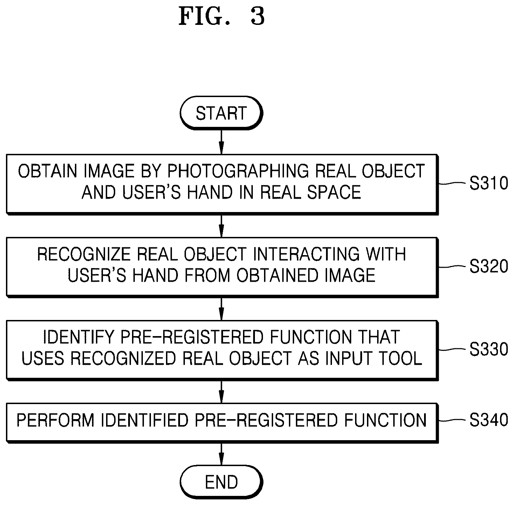

FIG. 3 is a flowchart showing a method of using a real object as an input tool of an electronic device, according to an embodiment of the present disclosure. Redundant descriptions overlapping what are described in FIGS. 1 and 2 will be omitted. For convenience of explanation, FIG. 3 will be described with reference to FIG. 2.

Referring to FIG. 3, the method of using a real object as an input tool of the electronic device 200 may include operations S310 to S340. In an embodiment, operations S310 to S340 may be performed by the electronic device 200 or the processor 250 of the electronic device 200. The method by which the electronic device 200 uses the real object as an input tool according to an embodiment of the present disclosure is not limited to what is depicted in FIG. 3, and one of the operations depicted in FIG. 3 may be omitted or an operation not depicted in FIG. 3 may further be included.

In operation S310, the electronic device 200 may obtain an image by photographing a real object and the hand 10 of the user in real space. The camera 210 may take an image of the real space including the real object and the hand 10 of the user. The processor 250 or an image processing module of the camera 210 may generate a video based on the captured real scene.

In operation S320, the electronic device 200 may recognize a real object interacting with the hand 10 of the user from the obtained image. The electronic device 200 may obtain a result of the recognizing. For example, the result of the recognizing may include at least one of position information (e.g., a bounding box, etc.) and edge information (e.g., a polygon, a set of dots, a pixel mask, etc.) of each of the real object and the hand 10 of the user. In an embodiment of the present disclosure, the electronic device 200 may use an Al model having at least one image as an input to detect the real object and the hand 10 of the user.

In operation S330, the electronic device 200 may identify a pre-registered function which uses the recognized real object as an input tool. In an embodiment of the present disclosure, the pre-registered function may be determined in advance according to a setting of the user or manufacturer and stored in the memory 260. In an embodiment of the present disclosure, the pre-registered function may be a function for generating or deleting a virtual object. In an embodiment of the present disclosure, the pre-registered function may be a function for determining a performance value of the virtual object according to a characteristic (e.g., color, texture, shape, etc.) of the real object. In an embodiment of the present disclosure, the pre-registered function may be a function for generating a predetermined virtual object according to a predetermined motion. In an embodiment of the present disclosure, the pre-registered function may be a function for activating at least one predetermined sensor.

In an embodiment of the present disclosure, based on detection of a pre-registered (pre-stored) real object or interaction between the real object and the hand 10 of the user, the electronic device 200 may identify a pre-registered function mapped to the detected real object. For example, the electronic device 200 may access a mapping table stored in the memory 260 (or storage) or an external device. The mapping table may include relationship information between a detection result and a function. For example, the mapping table may include relationship information between a type and a function of the real object, relationship information between a shape and a function of the real object, relationship information between an interaction between the hand 10 of the user and the real object and a function, etc. In an embodiment of the present disclosure, the mapping table may be determined in advance according to a setting of the user or manufacturer. The electronic device 200 may identify a pre-registered function based on the mapping table.

In operation 340, the electronic device 200 may perform the identified pre-registered function. In an embodiment of the present disclosure, the electronic device 200 may perform a function for generating a virtual object. In an embodiment of the present disclosure, the electronic device 200 may perform a function for deleting a pre-generated virtual object.

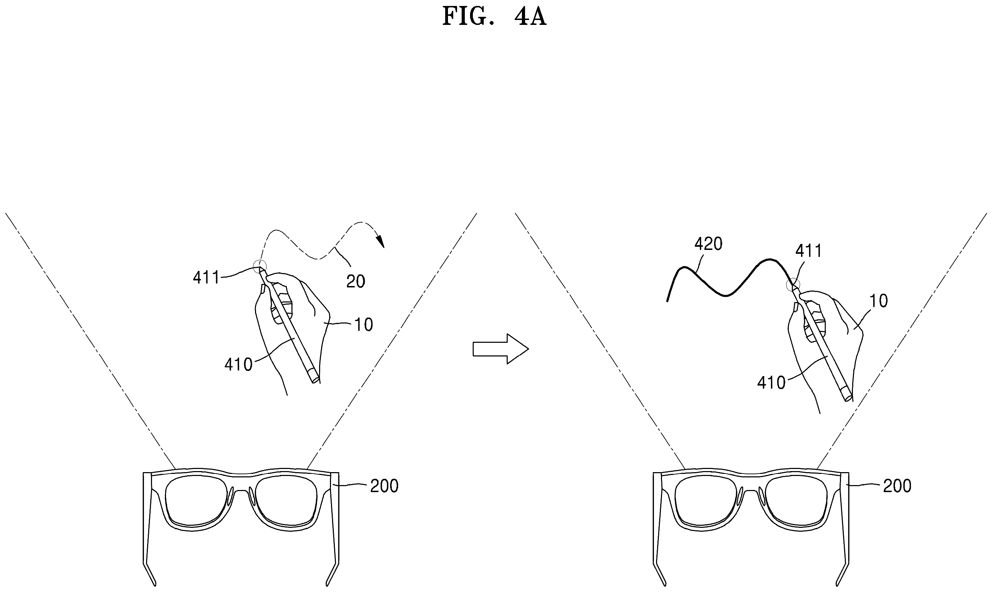

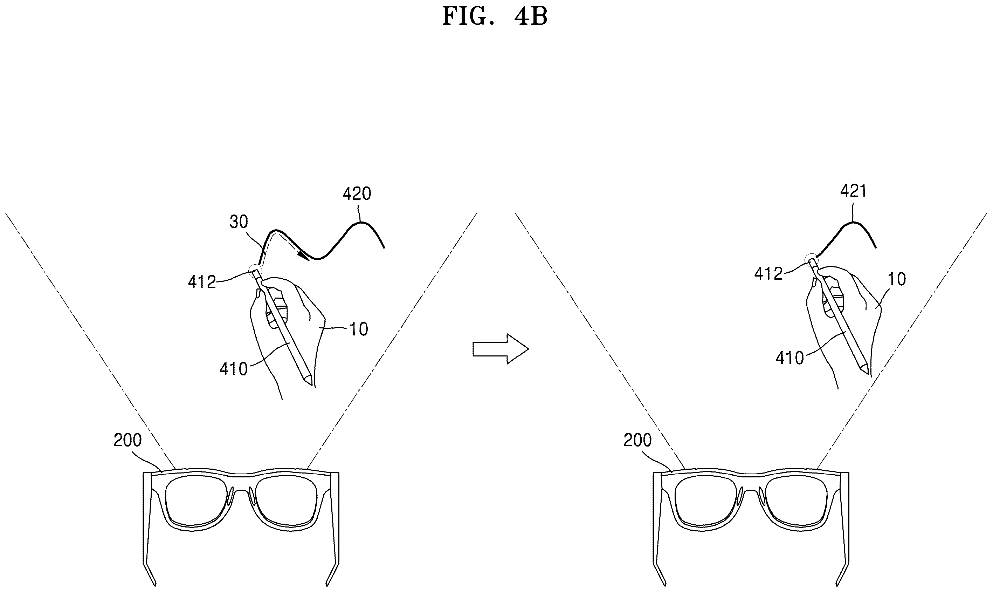

FIGS. 4A and 4B are conceptual diagrams for describing an operation of generating or deleting a virtual object by using a real object, according to an embodiment of the present disclosure. Redundant descriptions overlapping what are described in FIGS. 1 to 3 will be omitted. For convenience of explanation, FIGS. 4A and 4B will be described with reference to FIG. 2.

Referring to FIG. 4A, the electronic device 200 may recognize (or detect) a real object 410 and the hand 10 of the user from an image. The electronic device 200 may track the motion of the whole or at least a portion of the recognized real object 410. For example, the electronic device 200 may track the motion of one end 411 (e.g., a pencil tip) of the real object 410. Along with the motion of the hand 10 of the user, a motion of the one end 411 of the real object 410 may be produced. For example, the one end 411 of the real object 410 may move along a path 20. However, the path 20 is merely an example of being recognized (or detected) according to the motion of the hand 10 of the user, and a path on which the one end 411 of the real object 410 may move is not limited to the path 20 depicted in FIG. 4A.

In an embodiment of the present disclosure, a portion of the real object 410 to be subject to tracking may be determined in advance. In an embodiment of the present disclosure, the electronic device 200 may divide the real object 410 into a plurality of portions. For example, the electronic device 200 may divide the real object 410 into a plurality of portions by using an Al model having a video as an input. For example, in a case that the real object 410 is a pencil as depicted in FIG. 4A, the electronic device 200 may divide the pencil into a first portion corresponding to one end of the pencil where there is a graphite core, a second portion corresponding to the other end of the pencil where there is an eraser, and a third portion corresponding to a body part of the pencil (e.g., where the distance from the one end of the pencil is equal to the distance from the other end of the pencil).

The electronic device 200 may generate a virtual object 420 based on the tracked motion. For example, based on a recognition result, the electronic device 200 may recognize that the hand 10 of the user is positioned toward the one end 411 of the pencil where there is the graphite core. The electronic device 200 may perform a function for generating a virtual object (also referred to as a drawing function) based on the recognition result. Based on the tracked motion, the electronic device 200 may obtain the path 20 on which the one end 411 of the pencil has moved. The electronic device 200 may generate the virtual object 420 along the path 20 on which the one end 411 of the pencil has moved. In an embodiment of the present disclosure, the virtual object 420 may be displayed on the display 244 of the electronic device 200.

Referring to FIG. 4B, the electronic device 200 may recognize (or detect) the real object 410 and the hand 10 of the user from an image. The electronic device 200 may track the motion of at least a portion of the recognized real object 410. For example, the electronic device 200 may track the motion of the other end 412 (e.g., an eraser portion of the pencil or a portion farthest from the pencil tip portion) of the real object 410. Along with the motion of the hand 10 of the user, a motion of the other end 412 of the real object 410 may be produced. For example, the other end 412 of the real object 410 may move along a path 30. However, the path 30 is merely an example of being recognized (or detected) according to the motion of the hand 10 of the user, and a path on which the other end 412 of the real object 410 may move is not limited to the path 30 depicted in FIG. 4B.

The electronic device 200 may delete the virtual object 420 based on the tracked motion. For example, based on a recognition result, the electronic device 200 may recognize that the hand 10 of the user is positioned toward the other end 412 of the pencil where there is the eraser. The electronic device 200 may perform a function for deleting the virtual object (also referred to as an erasing function) based on the recognition result. Based on the tracked motion, the electronic device 200 may obtain the path 30 on which the other end 412 of the pencil has moved. The electronic device 200 may delete the virtual object 420 along the path 30 on which the other end 412 of the pencil has moved. In an embodiment of the present disclosure, a portion corresponding to the path 30 on which the other end 412 of the pencil has moved of the virtual object 420 may be deleted, and only a remaining portion 421 may be displayed on the display 244.

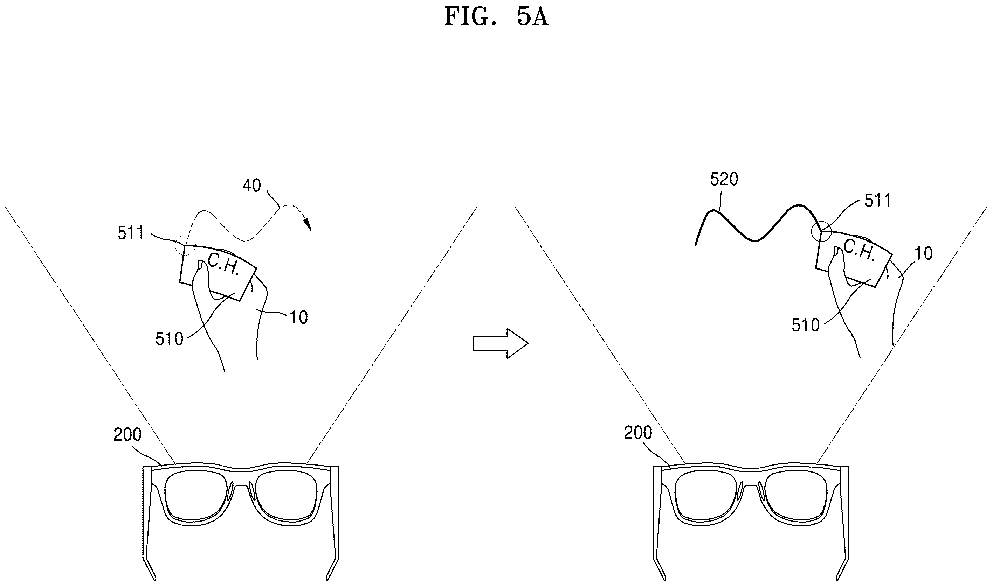

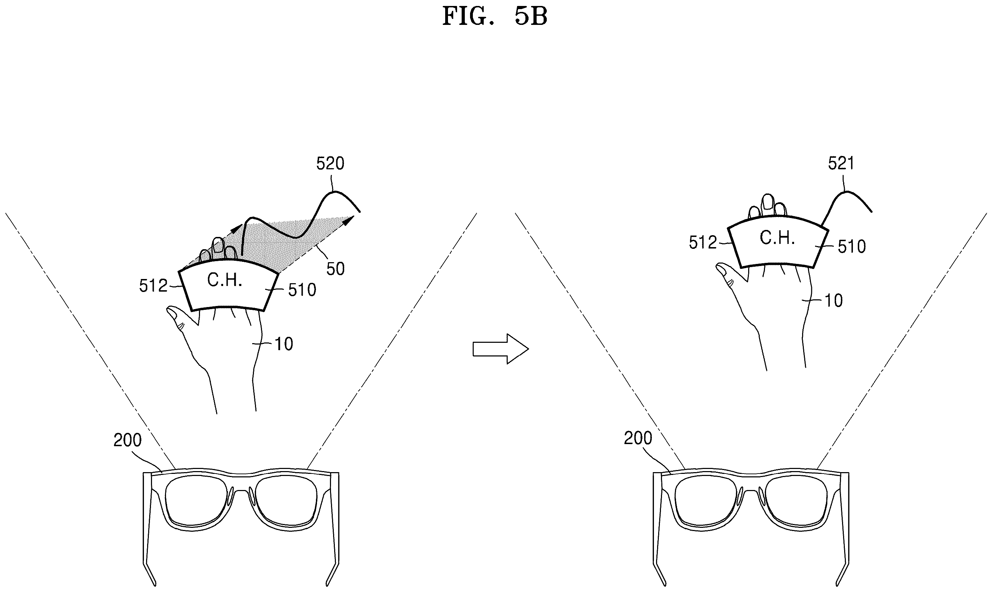

FIGS. 5A and 5B are conceptual diagrams for describing an operation of generating or deleting a virtual object by using a real object, according to an embodiment of the present disclosure. Redundant descriptions overlapping what are described in FIGS. 1 to 4B will be omitted. For convenience of explanation, FIGS. 5A and 5B will be described with reference to FIG. 2.

Referring to FIG. 5A, the electronic device 200 may recognize (or detect) a real object 510 and the hand 10 of the user from an image. The electronic device 200 may track the motion of the whole or at least a portion of the recognized real object 510. Although the real object 510 is depicted as a paper cup holder in FIGS. 5A and 5B, the real object 510 may be any object including at least one sharp edge or pointy edge. For example, the electronic device 200 may track the motion of an edge 511 of the real object 510 (e.g., one of the edges of the paper cup holder). Along with the motion of the hand 10 of the user, a motion of the edge 511 of the real object 510 may be produced. For example, the edge 511 of the real object 510 may move on a path 40. However, the path 40 is merely an example of being recognized (or detected) according to the motion of the hand 10 of the user, and a path on which the edge 511 of the real object 510 may move is not limited to the path 40 depicted in FIG. 5A.

The electronic device 200 may generate a virtual object 520 based on the tracked motion. For example, based on a recognition result, the electronic device 200 may recognize that the hand 10 of the user is positioned toward the edge 511 of the paper cup holder. The electronic device 200 may perform a function for generating a virtual object (also referred to as a drawing function) based on the recognition result. Based on the recognition result, the electronic device 200 may obtain the path 40 on which the edge 511 of the paper cup holder has moved. The electronic device 200 may generate the virtual object 520 along the path 40 on which the edge 511 of the paper cup holder has moved. In an embodiment of the present disclosure, the virtual object 520 may be displayed on the display 244.

Referring to FIG. 5B, the electronic device 200 may recognize (or detect) the real object 410 and the hand 10 of the user from an image. The electronic device 200 may track the motion of the whole or at least a portion of the recognized real object 510. For example, the electronic device 200 may track the motion of an entire area 512 of the real object 510 (e.g., the entire area of the paper cup holder at a viewing angle looking at the paper cup holder). Along with the motion of the hand 10 of the user, a motion of the entire area 512 of the real object 510 may be produced. For example, the entire area 512 of the real object 510 may move on a path 50. However, the path 50 is merely an example of being recognized (or detected) according to the motion of the hand 10 of the user, and a path on which the entire area 512 of the real object 510 may move is not limited to the path 50 depicted in FIG. 5B.

The electronic device 200 may delete the virtual object 520 based on the tracked motion. For example, based on a recognition result, the electronic device 200 may recognize a form in which the real object 510 is put in the hand 10 of the user. The electronic device 200 may perform a function for deleting the virtual object (also referred to as an erasing function) based on the recognition result. Based on the tracked motion, the electronic device 200 may obtain the path 30 on which the entire area 512 of the real object 510 has moved. The electronic device 200 may delete the virtual object 520 along the path 50 on which the entire area 512 of the real object 510 has moved. In an embodiment of the present disclosure, a portion corresponding to the path 50 on which the entire area 512 of the real object 510 has moved of the virtual object 520 may be deleted, and only a remaining portion 521 may be displayed on the display 244.

Referring to FIGS. 4A to 5B, in an embodiment of the present disclosure, the real object 410 or 510 may be pre-registered (or stored) as an input tool. For example, the electronic device 200 may extract a feature of the real object 410 or 510. For example, the feature of the real object 410 or 510 may include at least one of the shape, form, color or texture, and may be any feature to uniquely identify the real object 410 or 510. In an embodiment of the present disclosure, the electronic device 200 may detect the real object 410 or 510 from at least one image. The electronic device 200 may compare the feature of the detected real object 410 or 510 with a feature of the pre-registered input tool. For example, the electronic device 200 may compare the feature of the detected real object 410 or 510 with the feature of the pre-registered input tool by using a distance measurement, a Euclid distance, cosine similarity, etc., between the features.

In an embodiment of the present disclosure, the electronic device 200 may register which portion of the real object 410 or 510 is to be tracked in advance. For example, based on at least one of the form of the real object 410 or 510, the form of the hand 10 of the user and a feature of interaction between the hand 10 of the user and the real object 410 or 510 (e.g., the form in which the hand 10 of the user is gripping the real object 410 or 510 and a position in which the hand 10 of the user is gripping the real object 410 or 510), the electronic device 200 may register which portion of the real object 410 or 510 is to be tracked in advance.

In an embodiment of the present disclosure, the electronic device 200 may register the feature (e.g., color, thickness, etc.) of the virtual object 420 or 520 according to a result of tracking the real object 410 or 510 in advance. For example, based on the form of the real object 410 or 510, the form in which the hand 10 of the user is gripping the real object 410 or 510 and the position in which the hand 10 of the user is gripping the real object 410 or 510, the electronic device 200 may register the feature of the virtual object 420 or 520 in advance.

In an embodiment of the present disclosure, by registering the real object, a tracking target of the real object, or a function of the real object in advance, accurate and quick detection and tracking operations may be performed.

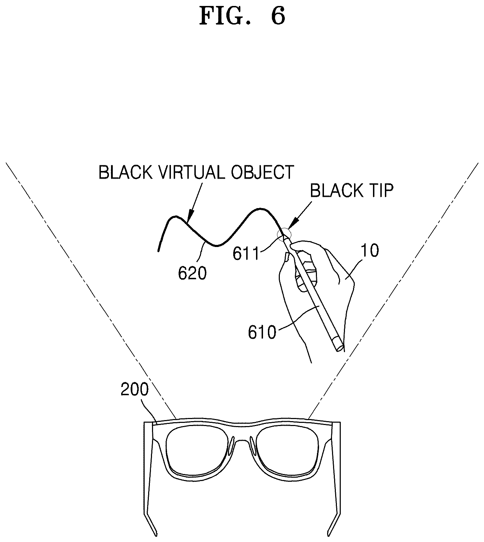

FIG. 6 is a conceptual diagram for describing an operation of determining a color of a virtual object based on a color of at least a portion of a real object used as an input tool, according to an embodiment of the present disclosure. Redundant descriptions overlapping what are described in FIGS. 1 to 5B will be omitted. For convenience of explanation, FIG. 6 will be described with reference to FIG. 2.

Referring to FIG. 6, the electronic device 200 may detect a real object 610 and the hand 10 of the user. The electronic device 200 may track the motion of an end 611 of the real object 610. The electronic device 200 may generate a virtual object 620 based on results of the detecting and tracking. In an embodiment of the present disclosure, the electronic device 200 may determine a color of the virtual object 620 based on a color of the one end 611 of the real object 610. For example, as depicted in FIG. 6, although the color of the one end 611 of the real object 610 is assumed to be black, the disclosure is not limited thereto and the color of the one end 611 of the real object 610 may be any color. The electronic device 200 may recognize that the color of the one end 611 of the real object 610 (e.g., a tip portion of a pencil) is black. The electronic device 200 may determine the color of the virtual object 620 to be black based on the color of the one end 611 of the real object 610 being black. The electronic device 200 may generate a virtual object of the determined color (e.g., black).

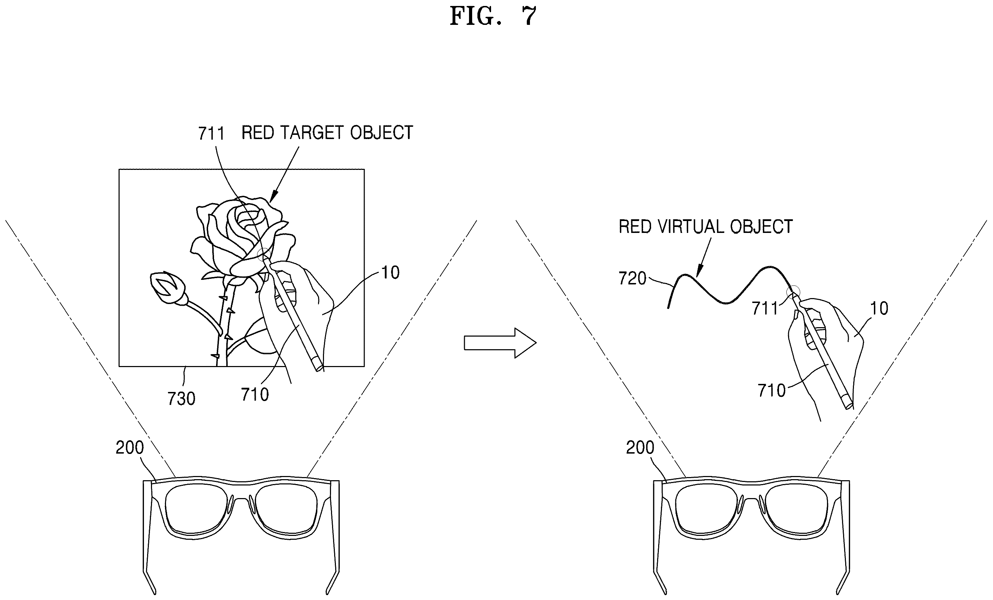

FIG. 7 is a conceptual diagram for describing an operation of determining a color of a virtual object based on a color of a target object indicated by a real object, according to an embodiment of the present disclosure. Redundant descriptions overlapping what are described in FIGS. 1 to 5B will be omitted. For convenience of explanation, FIG. 7 will be described with reference to FIG. 2.

Referring to FIG. 7, the electronic device 200 may obtain an image including a real object 710, the hand 10 of the user gripping the real object 710 and a target object 731. In an embodiment of the present disclosure, the target object 731 may be an object included in an extra image 730 displayed on the display 244. In this case, an image may include the extra image 730, the real object 710, and the hand 10 of the user.

The electronic device 200 may detect the real object 710, the hand 10 of the user 10 and the target object 731 from the image obtained through the camera 210. In an embodiment of the present disclosure, the electronic device 200 may track the motion of one end 711 of the real object 710. The electronic device 200 may generate a virtual object 720 based on a result of the tracking.

In an embodiment of the present disclosure, the electronic device 200 may recognize the target object 731 indicated by the one end 711 of the real object 710 from the image. The electronic device 200 may determine at least one of a color, a shape and a form of the virtual object 720, based on at least one of a color, a shape and a form of the target object 731. The electronic device 200 may generate the virtual object 720 having at least one of the determined color, shape and form. For example, as depicted in FIG. 7, although the color of the target object 731 is assumed to be red, the disclosure is not limited thereto and the color of the target object 731 may be any color. The electronic device 200 may recognize that the color of the target object 731 is red. The electronic device 200 may determine the color of the virtual object 720 to be red based on the color of the target object 731 being red. The electronic device 200 may generate the virtual object 720 having the determined color (e.g., red).

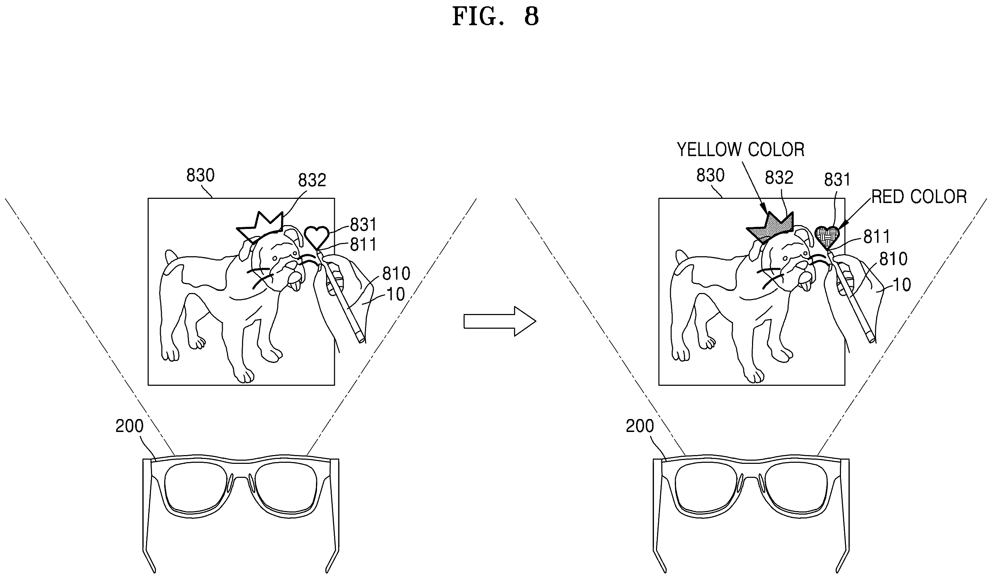

FIG. 8 is a conceptual diagram for describing an operation of determining a color of a virtual object based on a shape of a virtual object, according to an embodiment of the present disclosure. Redundant descriptions overlapping what are described in FIGS. 1 to 5B will be omitted. For convenience of explanation, FIG. 8 will be described with reference to FIG. 2.

Referring to FIG. 8, the electronic device 200 may recognize (or detect) the real object 810 and the hand 10 of the user from an image obtained through the camera 210 of the electronic device 200. The electronic device 200 may track the motion of at least a portion 811 of the recognized real object 810. The electronic device 200 may generate virtual objects 831 and 832 based on a result of the tracking. In an embodiment of the present disclosure, the virtual objects 831 and 832 may be synthesized on an image 830 displayed on the display 244. The synthesizing may include combining the image 830 and the virtual objects 831 and 832 so that the virtual objects 831 and 832 may overlap in a partial area of the image 830.

In an embodiment of the present disclosure, the electronic device 200 may determine the type of the virtual object 831 or 832. For example, the electronic device 200 may classify the virtual objects 831 and 832 by using an AI model having a virtual image corresponding to the virtual object 831 or 832 as an input. For example, the electronic device 200 may classify the virtual object 831 or 832 into a preset class. For example, the Al model may classify the virtual object 831 into a heart class. For example, the Al model may classify the virtual object 832 into a crown class.

In an embodiment of the present disclosure, the electronic device 200 may determine the color mapped in advance to the classification result (e.g., the class information, an output of the Al model) to be the color of the virtual object 831 or 832. For example, the electronic device 200 may access a mapping table stored in the memory 260 (or storage) or an external device. For example, the mapping table may include relationship information between class and color. In an embodiment of the present disclosure, the mapping table may be determined in advance according to settings of the user or manufacturer. Based on the mapping table, the electronic device 200 may determine a color mapped to the class to be the color of the virtual object 831 or 832. For example, the heart class may be mapped to red, and the crown class may be mapped to yellow. The electronic device 200 may determine the color of the virtual object 831 to be red and the color of the virtual object 832 to be yellow. In an embodiment of the present disclosure, the color of the virtual object 831 or 832 may refer to at least one of the color of the outline of the virtual object 831 or 832 and the color of an area occupied by the virtual object 831 or 832. The electronic device 200 may generate the virtual objects 831 or 832 based on the determined color.

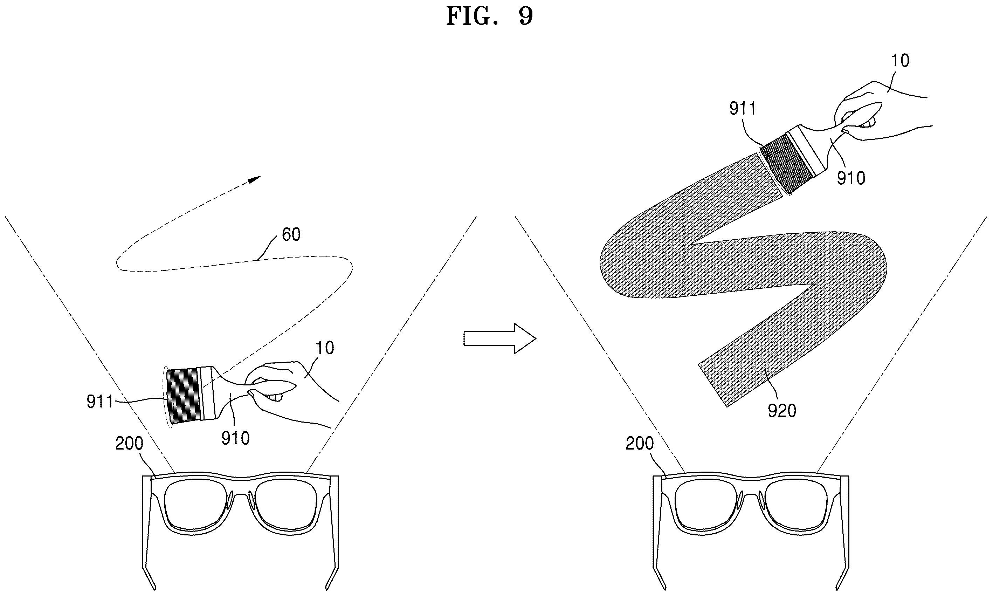

FIG. 9 is a conceptual diagram for describing an operation of determining a size of a virtual object based on a size of at least a portion of a real object, according to an embodiment of the present disclosure. Redundant descriptions overlapping what are described in FIGS. 1 to 5B will be omitted. For convenience of explanation, FIG. 9 will be described with reference to FIG. 2.

Referring to FIG. 9, the electronic device 200 may recognize (or detect) a real object 910 and the hand 10 of the user from an image obtained through the camera 210 of the electronic device 200. The electronic device 200 may track the motion of at least a portion of the recognized real object 610. Although the real object 910 is depicted as a brush in FIG. 9, the present disclosure is not limited thereto, and the real object 910 may be any object, a portion of which, subject to tracking, has a certain size (e.g., width). For example, the electronic device 200 may track the motion of one end 911 (e.g., a head part of the brush) of the real object 910. Along with the motion of the hand 10 of the user, a motion of the one end 911 of the real object 910 may be produced. For example, the one end 911 of the real object 910 may move on a path 60. However, the path 60 is merely an example of being recognized (or detected) according to the motion of the hand 10 of the user, and a path on which the one end 911 of the real object 910 may move is not limited to the path 60 depicted in FIG. 9.

The electronic device 200 may generate a virtual object 920 based on a result of the tracking. For example, based on a recognition result, the electronic device 200 may recognize that the hand 10 of the user is positioned toward the one end 911 of the real object 910 (e.g., the head part of the brush). The electronic device 200 may perform a virtual object generation function based on a result of the recognizing. Based on the result of the tracking, the electronic device 200 may obtain the path 60 on which the one end 911 of the real object 910 (e.g., the head part of the brush) has moved. The electronic device 200 may generate the virtual object 920 along the path 60 on which the one end 911 of the real object 910 (e.g., the head part of the brush) has moved. In an embodiment of the present disclosure, the electronic device 200 may determine the size (e.g., width) of the virtual object 620 based on the size (e.g., width) of the one end 911 of the real object 910 (e.g., the head part of the brush). Based on a recognition result, the electronic device 200 may determine the width of the one end 911 of the real object 910 (e.g., the head part of the brush). The electronic device 200 may generate the virtual object 920 having the width of the one end 911 of the real object 910 (e.g., the head part of the brush) centered on the path 60 on which the one end 911 of the real object 910 (e.g., the head part of the brush) has moved. In an embodiment of the present disclosure, the virtual object 920 may be displayed on the display 244.

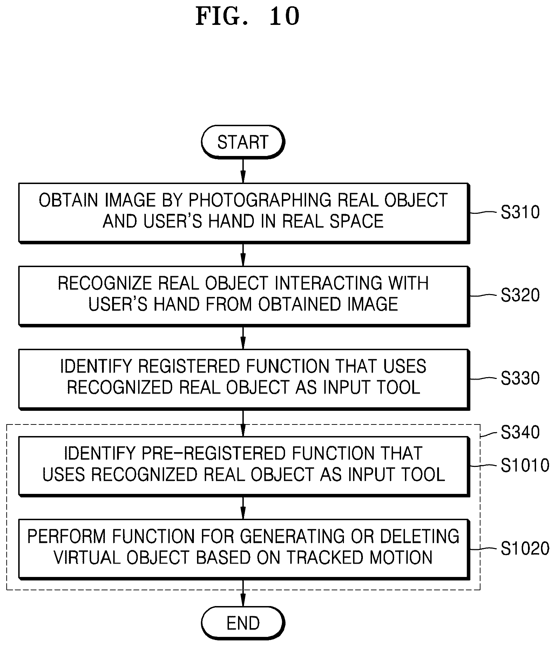

FIG. 10 is a flowchart showing a method of performing a function for generating or deleting a virtual object by tracing at least a portion of a real object, according to an embodiment of the present disclosure. Redundant descriptions overlapping what are described in FIGS. 1 to 9 will be omitted. For convenience of explanation, FIG. 10 will be described with reference to FIGS. 2 and 3.

Referring to FIG. 10, operation S340 of FIG. 3 may include operations S1010 and S1020. In an embodiment of the present disclosure, operations S1010 and S1020 may be performed by the electronic device 200 or the processor 250 of the electronic device 200. Detailed operations of operation S340 according to the present disclosure are not limited to what is depicted in FIG. 10, and one of the operations depicted in FIG. 10 may be omitted or an operation not depicted in FIG. 10 may further be included.

In operation S1010, the electronic device 200 may track the motion of at least a portion of a real object based on an obtained image. In an embodiment of the present disclosure, the electronic device 200 may track the motion of the at least a portion of the real object by using an Al model having at least one image as an input. For example, the at least a portion of the real object that is a tracking target may be set in advance. In this case, the electronic device 200 may additionally input information corresponding to the preset at least a portion of the real object to the Al model. For example, the information corresponding to the preset at least a portion of the real object may be position information or edge information of the at least a portion of the real object. The position information or edge information may be included in the recognition result. The result of the tracking may include at least one of a position, speed, a direction or a motion pattern of the tracking target.

In operation S1020, the electronic device 200 may perform a function for generating or deleting the virtual object based on the tracking result (also referred to as a tracked motion). For example, the electronic device 200 may generate a virtual object along a motion path (i.e., tracking result) formed by at least a portion of the real object. For example, the electronic device 200 may delete a virtual object already generated along the motion path (i.e., tracking result) formed by the at least a portion of the real object. Whether the electronic device 200 is to perform the function for generating a virtual object or perform the function for deleting a virtual object may be determined based on a recognition result (e.g., interaction between the recognized hand of the user and the real object). For example, the recognition result may include at least one of the shape of the real object, the shape of the user's hand, and an interaction between the real object and the user's hand (e.g., the form in which the user's hand is gripping the real object, and the position where the user's hand is gripping the real object).

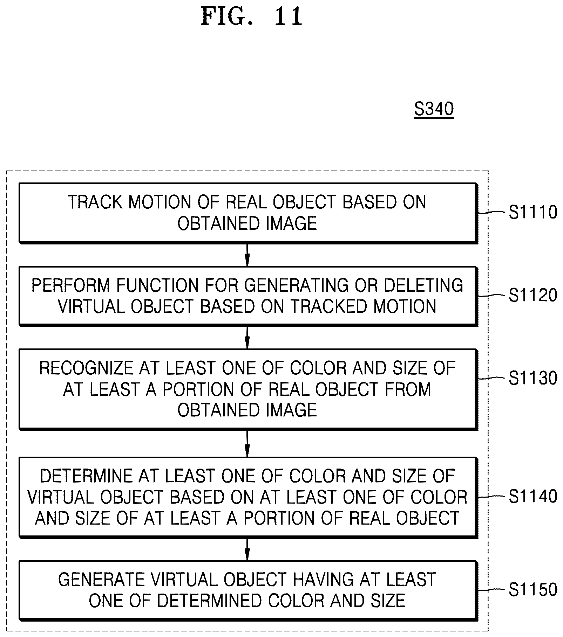

FIG. 11 is a flowchart showing a method of determining at least one of a color and a size of a virtual object based on at least one of a color and a size of at least a portion of a real object, according to an embodiment of the present disclosure. Redundant descriptions overlapping what are described in FIGS. 1 to 10 will be omitted. For convenience of explanation, FIG. 11 will be described with reference to FIGS. 2, 3 and 10.

Referring to FIG. 11, operation S1110 may correspond to operation S1010 of FIG. 10. Operation S1120 may correspond to operation S1020 of FIG. 10. In an embodiment of the present disclosure, operations S1110 to S1150 may be performed by the electronic device 200 or the processor 250 of the electronic device 200. Detailed operations of operation S340 are not limited to what is depicted in FIG. 11, and one of the operations depicted in FIG. 11 may be omitted or an operation not depicted in FIG. 11 may further be included.

In operation S1110, the electronic device 200 may track the motion of a real object based on an obtained image. Operation S1210 corresponds to operation S1010 of FIG. 10, so the detailed description will be omitted.

In operation S1120, the electronic device 200 may perform a function for generating or deleting a virtual object based on the tracked motion. Operation S1220 corresponds to operation S1020 of FIG. 10, so the detailed description will be omitted.

In operation S1130, the electronic device 200 may recognize at least one of a color and a size of at least a portion of the real object from the obtained image. In an embodiment of the present disclosure, the electronic device 200 may recognize the color of the at least a portion of the real object from the obtained image. For example, the electronic device 200 may recognize the color of one end of the real object (e.g., a tip part of a color pencil). In an embodiment of the present disclosure, the electronic device 200 may recognize the size of the at least a portion of the real object from the obtained image. For example, the electronic device 200 may recognize the size of one end of the real object (e.g., a head part of a brush). In an embodiment of the present disclosure, the at least a portion of the real object may be a portion corresponding to a tracking target in the real object.

In operation S1140, the electronic device 200 may determine at least one of the color and the size of the virtual object based on at least one of the color and the size of the at least a portion of the real object. For example, the at least a portion of the real object (i.e., tracking target) has a red color, the electronic device 200 may determine the color of the virtual object to be red. For example, the at least a portion of the real object (i.e., tracking target) is in a certain size, the electronic device 200 may determine that the size of the virtual object has the certain size.

In operation S1150, the electronic device 200 may generate a virtual object having at least one of the determined color and size. In an embodiment of the present disclosure, the virtual object may be displayed on the display 244.

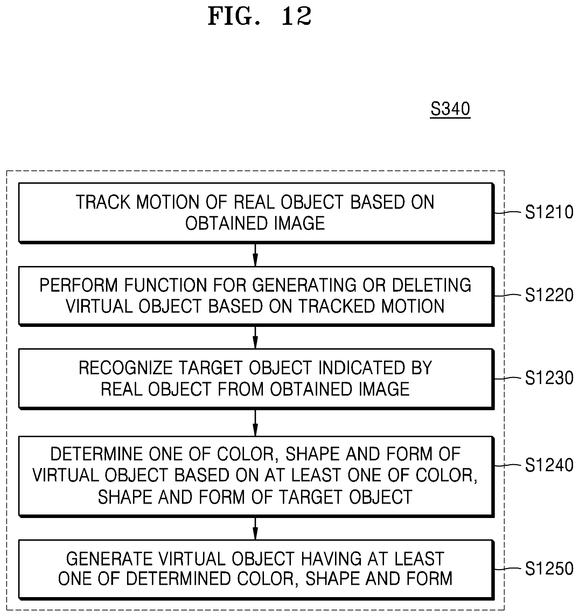

FIG. 12 is a flowchart showing a method of determining a color, a shape and a form of a virtual object based on a color, a shape and a form of a target object indicated by a real object, according to an embodiment of the present disclosure. Redundant descriptions overlapping what are described in FIGS. 1 to 11 will be omitted. For convenience of explanation, FIG. 12 will be described with reference to FIGS. 2, 3 and 10.

Referring to FIG. 12, operation S1210 may correspond to operation S1010 of FIG. 10. Operation S1220 may correspond to operation S1020 of FIG. 10. In an embodiment of the present disclosure, operations S1210 to S1250 may be performed by the electronic device 200 or the processor 250 of the electronic device 200. Detailed operations of operation S340 are not limited to what is depicted in FIG. 12, and one of the operations depicted in FIG. 12 may be omitted or an operation not depicted in FIG. 12 may further be included.

In operation S1210, the electronic device 200 may track the motion of a real object based on an obtained image. Operation S1210 corresponds to operation S1010 of FIG. 10, so the detailed description will be omitted.

In operation S1220, the electronic device 200 may perform a function for generating or deleting the virtual object based on the tracked motion. Operation S1220 corresponds to operation S1020 of FIG. 10, so the detailed description will be omitted.

In operation S1230, the electronic device 200 may recognize a target object indicated by the real object from the obtained image. The target object is included in the obtained image, but may be a real object different from a real object interacting with the hand 10 of the user. The electronic device 200 may detect the target object from the image. The electronic device 200 may determine whether at least a portion of the real object indicates the target object based on the tracking result. For example, the electronic device 200 may determine whether the at least a portion of the real object is positioned where the target object is, based on at least one of the location, speed or direction of the at least a portion of the real object. Based on determining that the at least a portion of the real object is positioned where the target object is, the electronic device 200 may determine that the at least a portion of the real object indicates the target object. In an embodiment of the present disclosure, the target object may be an object represented in an image displayed on the display 244. In an embodiment of the present disclosure, the target object may be a real object in a real physical environment space.

In operation S1240, the electronic device 200 may determine one of the color, the shape and the form of the virtual object based on at least one of the color, the shape and the form of the target object. For example, in a case that the target object has a red color, the electronic device 200 may determine the color of the virtual object to be red. For example, in a case that a portion of the target object corresponding to a location indicated by the real object has a blue color, the electronic device 200 may determine the color of the virtual object to be blue.

In operation S1250, the electronic device 200 may generate the virtual object having at least one of the determined color, shape and form. In an embodiment of the present disclosure, the virtual object may be displayed on the display 244.

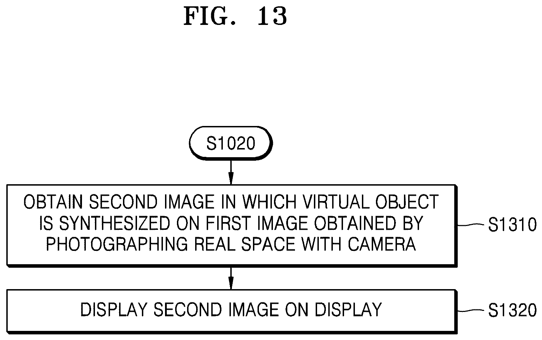

FIG. 13 is a flowchart showing a method of obtaining an image in which a virtual object is synthesized on a real image, according to an embodiment of the present disclosure. Redundant descriptions overlapping what are described in FIGS. 1 to 12 will be omitted. For convenience of explanation, FIG. 13 will be described with reference to FIG. 2.

Referring to FIG. 13, the method of obtaining the image in which the virtual object is synthesized on a real image according to an embodiment of the present disclosure may include operations S1310 and S1320 after operation S1020. In an embodiment, operations S310 and S1320 may be performed by the electronic device 200 or the processor 250 of the electronic device 200. The method of obtaining the image in which the virtual object is synthesized on the real image according to an embodiment of the present disclosure is not limited to what is depicted in FIG. 13, and one of the operations depicted in FIG. 13 may be omitted or an operation not depicted in FIG. 13 may further be included.

In operation S1310, the electronic device 200 may obtain a second image in which a virtual object is synthesized on a first image obtained by photographing a real space with the camera 210. For example, the first image may correspond to the real image 131 of FIG. 1. For example, the virtual object synthesized on the real image 131 may correspond to the virtual object 132. For example, the second image may correspond to the synthesized image 130 of FIG. 1.

In operation S1320, the electronic device 200 may display the second image on the display 244 or a display of an external device.

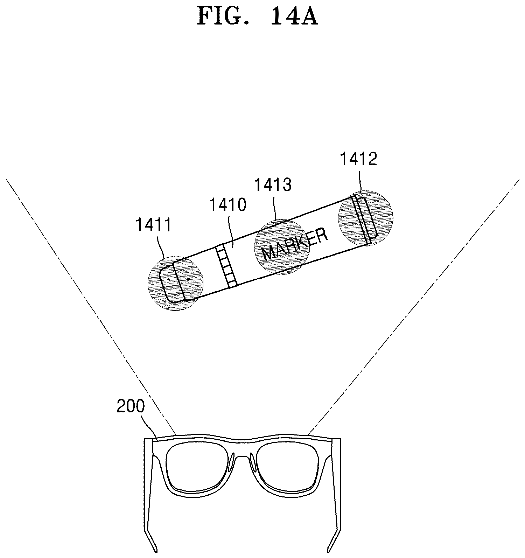

FIGS. 14A to 14D are conceptual diagrams for describing an operation of identifying a pre-registered function based on an occluded portion of a real object, according to an embodiment of the present disclosure. Redundant descriptions overlapping what are described in FIGS. 1 to 13 will be omitted. For convenience of explanation, FIGS. 14A to 14D will be described with reference to FIG. 2.

Referring to FIG. 14A, the electronic device 200 may detect a real object 1410 from an image. The electronic device 200 may divide the real object 1410 into a plurality of portions. For example, the electronic device 200 may divide the real object 1410 into a plurality of portions by using an Al model having a video as an input. For example, the electronic device 200 may divide the real object 1410 into one end (e.g., a head part of a board marker) as a first portion 1411, the other end (e.g., a tail part of the board marker or a portion farthest from the one end of the board marker) as a second portion 1412, and a body part (e.g.,, a portion having equal distances to the one end of the board marker and the other end of the board marker) as a third portion 1413. The electronic device 200 may store the result of dividing the real object 1410 into the plurality of portions 1411, 1412 and 1413 in the memory 260. For example, the electronic device 200 may store position information or edge information of the plurality of portions 1411, 1412 and 1413 in the memory 260. Although the real object 1410 is illustrated as being divided into three portions in FIGS. 14A to 14D, the present disclosure is not limited thereto. In an embodiment of the present disclosure, the electronic device 200 may obtain at least one position value corresponding to each of the plurality of divided portions. For example, the electronic device 200 may obtain the at least one position value corresponding to each of the plurality of divided portions by determining a distance to each of the plurality of divided portions from the one end of the real object 1410 (e.g., the head part of the board marker). In an embodiment of the present disclosure, the electronic device 200 may divide the real object 1410 into a plurality of portions according to the determined positions.

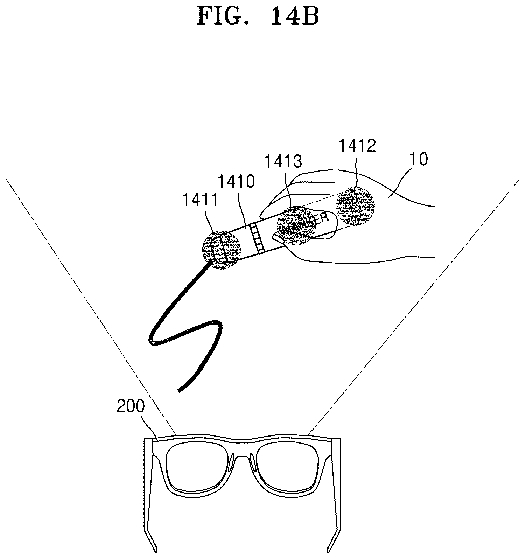

Referring to FIG. 14B, the electronic device 200 may detect the real object 1410 and the hand 10 of the user gripping the real object 1410. Based on the result of the dividing of FIG. 14A, the electronic device 200 may detect at least one portion occluded by the hand 10 of the user from among the plurality of portions 1411, 1412 and 1413. For example, as depicted in FIG. 14B, the second portion 1412, the other end of the real object 1410 (e.g., the tail part of the board marker or the portion farthest from the one end of the board marker) may be occluded by the hand 10 of the user gripping the real object 1410. The electronic device 200 may identify a pre-registered function based on detecting that the second portion 1412 of the real object 1410 is occluded. For example, the pre-registered function may be a function for generating a virtual object. The electronic device 200 may track the motion of the first portion 1411, the one end of the real object 1410 (e.g., the head part of the board marker). The electronic device 200 may generate a virtual object based on a result of the tracking.

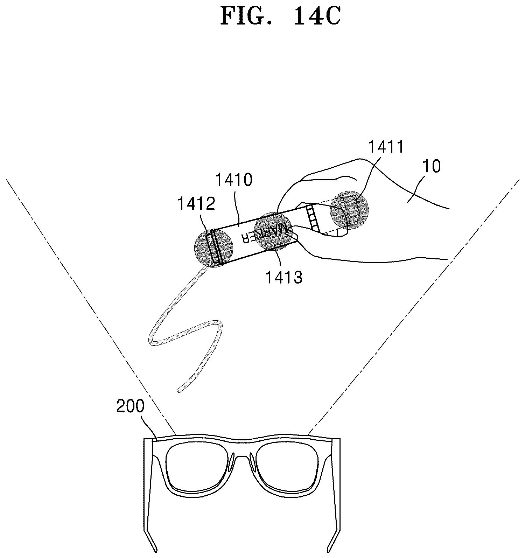

Referring to FIG. 14C, based on the result of the dividing of FIG. 14A, the electronic device 200 may detect at least one portion occluded by the hand 10 of the user from among the plurality of portions 1411, 1412 and 1413. For example, as depicted in FIG. 14C, the first portion 1411, the one end of the real object 1410 (e.g., the head part of the board marker) may be occluded by the hand 10 of the user gripping the real object 1410. The electronic device 200 may identify a pre-registered function based on detecting that the first portion 1411 of the real object 1410 is occluded. For example, the pre-registered function may be a function for deleting a virtual object. The electronic device 200 may track the motion of the second portion 1412, the other end of the real object 1410 (e.g., the tail part of the board marker or the portion farthest from the one end of the board marker). The electronic device 200 may delete an previously-generated virtual object based on a result of the tracking.

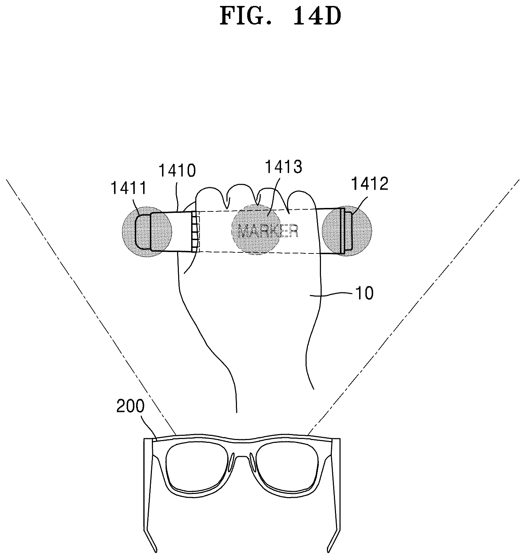

Referring to FIG. 14D, based on the result of the dividing of FIG. 14A, the electronic device 200 may detect at least one portion occluded by the hand 10 of the user from among the plurality of portions 1411, 1412 and 1413. For example, as depicted in FIG. 14D, the third portion 1413, the body part of the real object 1410 (e.g., portion having equal distances to the one end of the board marker and the other end of the board marker) may be occluded by the hand 10 of the user gripping the real object 1410. The electronic device 200 may perform a preset function based on detecting that the third portion 1413 of the real object 1410 is occluded. For example, the preset function may be a function for switching to a mode for setting a characteristic (e.g., color, thickness, etc.) of the virtual object. The electronic device 200 may detect a motion of the hand 10 of the user that is touching the first portion 1411, the one end of the real object 1410 (e.g., the head part of the board marker) or the second portion 1412, the other end of the real object 1410 (e.g., the tail part of the board marker or the portion farthest from the one end of the board marker). In the present disclosure, touching may refer to a motion of the hand 10 of the user contacting the real object 1410.

In an embodiment of the present disclosure, the electronic device 200 may perform a function for switching to a mode for setting a characteristic (e.g., color, thickness, etc.) of the virtual object based on the detected motion of the hand 10 of the user. For example, in the mode for setting a characteristic of the virtual object, when as many motions of the hand 10 of the user consecutively touching the first portion 1411 of the real object 1410 as the predetermined number of times are detected, the electronic device 200 may provide, through the display 244, a user interface including a button or a slider to determine a color of the virtual object. In an embodiment of the present disclosure, the electronic device 200 may determine a color of the virtual object based on the position or motion of the real object 1410. For example, in the mode for setting a characteristic of the virtual object, when as many motions of the hand 10 of the user consecutively touching the second portion 1412 of the real object 1410 as the predetermined number of times are detected, the electronic device 200 may provide, through the display 244, a user interface including a button or a slider to determine thickness of the virtual object. In an embodiment of the present disclosure, the electronic device 200 may determine the thickness of the virtual object based on the position or motion of the real object 1410. For example, when the motion of the hand 10 of the user touching the second portion 1412 of the real object 1410 for a predetermined time is detected, the electronic device 200 may obtain an image in which an image corresponding to a real scene and the virtual object displayed on the display are combined.

Although the motion of the hand 10 of the user is described as a motion of touching a divided portion of the real object 1410 as many as a predetermined number of times in the aforementioned example, the motion of the hand 10 of the user is not limited thereto. For example, the motion of the hand 10 of the user may be modified in various ways such as keeping touching the divided portion of the real object 1410 for a predetermined time or touching the real object 1410 with a predetermined number of fingers. For example, when a motion of touching the real object 1410 with two fingers (e.g., index finger and middle finger) is detected, the electronic device 200 may provide a user interface including a button or slider to determine a color of the virtual object, and when a motion of touching the real object 1410 with three fingers (e.g., index finger, middle finger and ring finger) is detected, the electronic device 200 may provide a user interface including a button or slider to determine thickness of the virtual object.

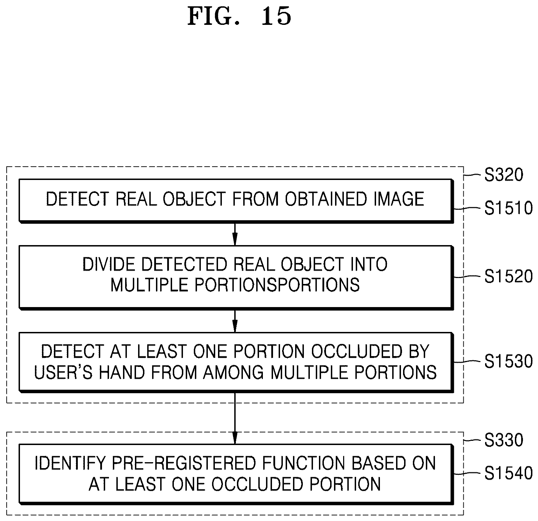

FIG. 15 is a flowchart showing a method of identifying a pre-registered function based on an occluded portion of a real object, according to an embodiment of the present disclosure. Redundant descriptions overlapping what are described in FIGS. 1 to 14D will be omitted. For convenience of explanation, FIG. 15 will be described with reference to FIGS. 2 and 14C.

Referring to FIG. 15, operation S320 of FIG. 3 may include operations S1510 to S1530. Operation S330 of FIG. 3 may include operation S1540. In an embodiment of the present disclosure, operations S1510 to S1540 may be performed by the electronic device 200 or the processor 250 of the electronic device 200. Detailed operations of operations S330 and S340 according to the present disclosure are not limited to what is depicted in FIG. 15, and one of the operations depicted in FIG. 15 may be omitted or an operation not depicted in FIG. 15 may further be included.

In operation S1510, the electronic device 200 may detect the real object 1410 from the obtained image. In an embodiment of the present disclosure, the electronic device 200 may detect the real object 1410 by using an Al model having at least one image as an input.

In operation S1520, the electronic device 200 may divide the detected real object 1410 int o the plurality of portions 1411, 1412 and 1413. In an embodiment of the present disclosure, the number or positions of the plurality of portions of the real object 1410 may be determined in advance by a setting of the user or manufacturer. In an embodiment of the present disclosure, the electronic device 200 may infer position information or edge information of the plurality of portions 1411, 1412 and 1413 of the real object 1410 by using an Al model having an image including the real object 1410 as an input. In an embodiment of the present disclosure, the position information or edge information of the plurality of portions 1411, 1412 and 1413 may be stored in advance. In this case, operation S1510 may be omitted.

In operation S1530, the electronic device 200 may detect at least one portion occluded by the hand 10 of the user from among the plurality of portions 1411, 1412 and 1413. In an embodiment of the present disclosure, the electronic device 200 may identify the positions of the plurality of portions 1411, 1412 and 1413 based on the result of the dividing. The electronic device 200 may compare the identified positions with the position of the hand 10 of the user. Based on the result of the dividing, the electronic device 200 may identify at least one portion occluded by the hand 10 of the user from among the plurality of portions 1411, 1412 and 1413. In an embodiment of the present disclosure, in a case that the position information or edge information of the plurality of portions 1411, 1412 and 1413 is stored in advance, the electronic device 200 may infer at least one portion occluded by the hand 10 of the user based on the position information or edge information of the plurality of portions 1411, 1412 and 1413 stored in advance.

In operation S1540, the electronic device 200 may identify a pre-registered function based on the at least one occluded portion. For example, based on at least one of the first portion 1411, the second portion 1412 and the third portion 1413 being occluded, the electronic device 200 may identify a mapped function from among the plurality of pre-registered functions. For example, the pre-registered function may include one of a function for generating a virtual object, a function for deleting the virtual object or a function for setting a characteristic of the virtual object, but the present disclosure is not limited thereto.

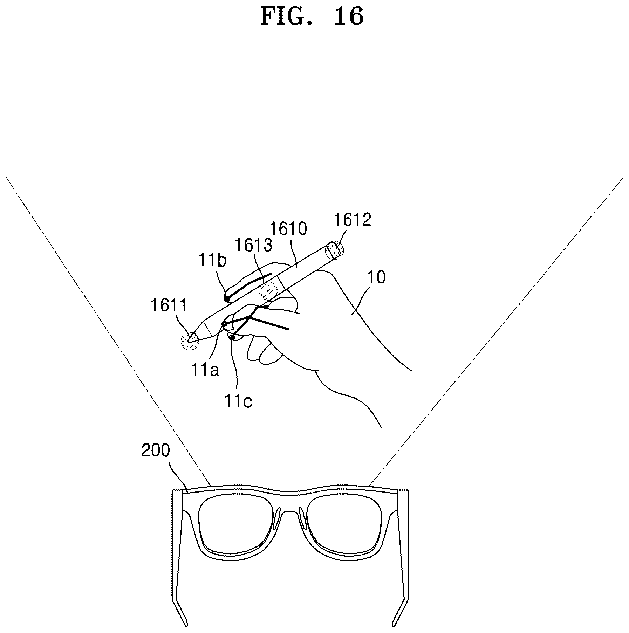

FIG. 16 is a conceptual diagram for describing an operation of identifying a pre-registered function based on a way that the hand 10 of the user is gripping a real object, according to an embodiment of the present disclosure. Redundant descriptions overlapping what are described in FIGS. 1 to 14A will be omitted. For convenience of explanation, FIG. 16 will be described with reference to FIG. 2.

Referring to FIG. 16, the electronic device 200 may detect a real object 1610 from an image. The electronic device 200 may divide the real object 1610 into a plurality of portions. For example, the electronic device 200 may divide the real object 1610 into the plurality of portions by using an Al model having at least one image as an input. For example, the electronic device 200 may divide the real object 1610 into one end (e.g., a tip part of a pen) as a first portion 1611, the other end (e.g., a tail part of the pen or a portion farthest from the tip part of the pen) as a second portion 1612, and a body part (e.g.,, a portion having equal distances to the one end of the pen and the other end of the pen) as a third portion 1613. Although the real object 1610 is illustrated as being divided into three portions in FIG. 16, the present disclosure is not limited thereto. In an embodiment of the present disclosure, the electronic device 200 may obtain at least one position value corresponding to each of the plurality of divided portions. In an embodiment of the present disclosure, the electronic device 200 may divide the real object 1610 into a plurality of portions according to the determined positions.

Based on the result of the dividing, the electronic device 200 may determine a position where the hand 10 of the user is gripping the real object 1610. Based on at least one position value corresponding to each of the plurality of divided portions, the electronic device 200 may determine a relative position where the hand 10 of the user is gripping the real object 1610. For example, the electronic device 200 may determine that the hand 10 of the user is gripping the real object 1610 at a position between the first portion 1611 and the third portion 1613. For example, in a case that it is determined that the hand 10 of the user is gripping the real object 1610 at a position between the first portion 1611 and the third portion 1613, the electronic device 200 may perform a function for generating a virtual object. For example, in a case that it is determined that the hand 10 of the user is gripping the real object 1610 at a position between the second portion 1612 and the third portion 1613, the electronic device 200 may perform a function for deleting a virtual object.

In an embodiment of the present disclosure, the electronic device 200 may determine a gripping direction that indicates toward which portion of the plurality of portions 1611, 1612 and 1613 the hand 10 of the user is gripping the real object 1610. In an embodiment of the present disclosure, the electronic device 200 may estimate a pose of the hand 10 of the user by using an Al model having an image including the hand 10 of the user as an input. For example, the electronic device 200 may detect the hand 10 of the user, and detect key points of joints included in the hand 10 of the user (e.g., portions connecting a plurality of bones included in the hand 10, which may refer to one or more portions included in the wrist, fingers, back of the hand, or the palm). The key point may refer to a point easy to identify or distinguish from the surrounding background in the image. For example, the key point of a hand joint may include at least one of, for example, a key point of a wrist joint, a key point of a palm joint, a key point of a joint in the back of the hand and a key point of a finger (thumb, index finger, middle finger, ring finger, or little finger). For example, the key point may include a two dimensional (2D) or three dimensional (3D) coordinate value.

In an embodiment of the present disclosure, the electronic device 200 may determine the gripping direction of the hand 10 of the user based on the key point. For example, based on the key point of at least one finger (e.g., a thumb 11a, an index finger 11b, or a middle finger 11c) of the hand 10 of the user, the electronic device 200 may identify a position and form of the finger. The electronic device 200 may determine a gripping direction of the hand 10 of the user based on the position and form of the finger. For example, the electronic device 200 may identify that the thumb 11a, the index finger 11b and the middle finger 11c are gripping the real object 1610 at the third portion 1613 toward the first portion 1612.

The electronic device 200 may identify and perform a pre-registered function based on the gripping direction. For example, in a case that it is determined that a direction in which the hand 10 of the user is gripping the real object 1610 is toward the first portion 1611 from the third portion 1613, the electronic device 200 may perform a function for generating a virtual object. For example, in a case that it is determined that a direction in which the hand 10 of the user is gripping the real object 1610 is toward the second portion 1612 from the third portion 1613, the electronic device 200 may perform a function for deleting the virtual object.

According to an embodiment of the present disclosure, an interaction between a real object and the hand 10 of the user may be more accurately identified by taking into account not only a gripping position but also a gripping direction.

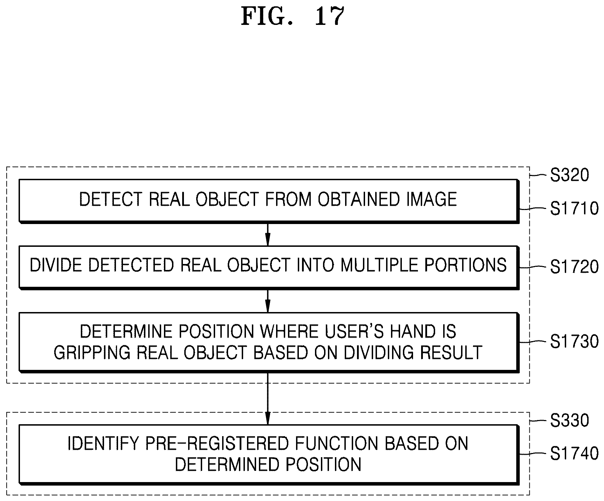

FIG. 17 is a flowchart showing a method of identifying a pre-registered function based on a way that the hand 10 of the user is gripping a real object, according to an embodiment of the present disclosure. Redundant descriptions overlapping what are described in FIGS. 1 to 16 will be omitted. For convenience of explanation, FIG. 17 will be described with reference to FIGS. 2, 15 and 16.

Referring to FIG. 17, operation S320 of FIG. 3 may include operations S1710 to S1730. Operation S330 of FIG. 3 may include operation S1740. In an embodiment of the present disclosure, operations S1710 to S1740 may be performed by the electronic device 200 or the processor 250 of the electronic device 200. Detailed operations of operations S330 and S340 according to the present disclosure are not limited to what is depicted in FIG. 17, and one of the operations depicted in FIG. 17 may be omitted or an operation not depicted in FIG. 17 may further be included. The operation S1710 corresponds to operation S1510 of FIG. 15, and operation S1720 corresponds to operation S1520 of FIG. 15, so the detailed description will be omitted.

In operation S1730, based on a result of the dividing, the electronic device 200 may determine a position where the hand 10 of the user is gripping the real object 1610. In an embodiment of the present disclosure, the electronic device 200 may identify the positions of the plurality of portions 1611, 1612 and 1613 based on the result of the dividing. The electronic device 200 may compare the identified positions with the position of the hand 10 of the user. Based on a result of the comparing, the electronic device 200 may determine a relative position of the hand 10 of the user as compared to the positions of the plurality of portions 1611, 1612 and 1613. In an embodiment of the present disclosure, in a case that the position information or edge information of the plurality of portions 1611, 1612 and 1613 is stored in advance, the electronic device 200 may infer a relative position of the hand 10 of the user based on the position information or edge information of the plurality of portions 1611, 1612 and 1613 stored in advance.

In operation S1740, the electronic device 200 may identify a pre-registered function based on the determined position. For example, based on the hand 10 of the user being positioned between at least two of the first portion 1611, the second portion 1612 and the third portion 1613, the electronic device 200 may identify a mapped function from among the plurality of pre-registered functions. For example, the pre-registered function may include one of a function for generating a virtual object, a function for deleting the virtual object or a function for setting a characteristic of the virtual object, but the present disclosure is not limited thereto.

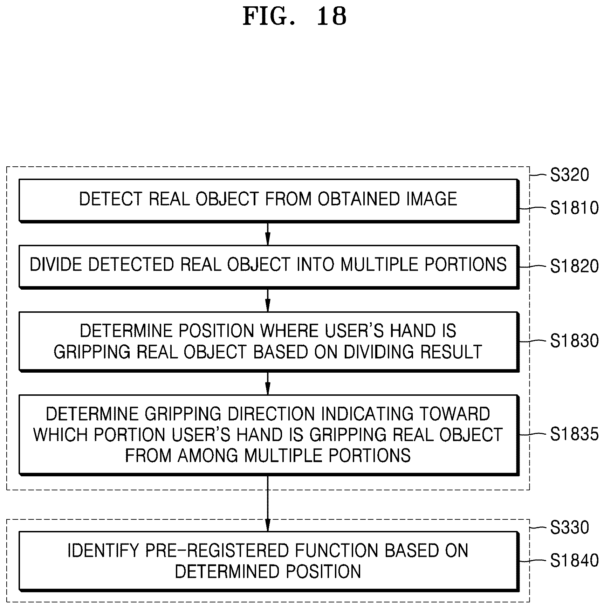

FIG. 18 is a flowchart showing a method of identifying a pre-registered function based on a way that the hand 10 of the user is gripping a real object, according to an embodiment of the present disclosure. Redundant descriptions overlapping what are described in FIGS. 1 to 17 will be omitted. For convenience of explanation, FIG. 18 will be described with reference to FIGS. 2, 15 to 17.

Referring to FIG. 18, operation S320 of FIG. 3 may include operations S1810 to S1835. Operation S330 of FIG. 3 may include operation S1840. In an embodiment of the present disclosure, operations S1810 to S1840 may be performed by the electronic device 200 or the processor 250 of the electronic device 200. Detailed operations of operations S330 and S340 according to the present disclosure are not limited to what is depicted in FIG. 18, and one of the operations depicted in FIG. 18 may be omitted or an operation not depicted in FIG. 18 may further be included. Operation S1810 corresponds to operation S1510 of FIG. 15, operation S1820 corresponds to operation S1520 of FIG. 15, and operation S1830 corresponds to operation S1730 of FIG. 17, so the detailed description thereof will be omitted.

In operation S1835, the electronic device 200 may determine a gripping direction that indicates toward which portion of the plurality of portions 1611, 1612 and 1613 the hand 10 of the user is gripping the real object 1610. In an embodiment of the present disclosure, the electronic device 200 may perform estimation of a pose of the hand 10 of the user by using an Al model. In an embodiment of the present disclosure, based on a result of the pose estimation, the electronic device 200 may determine a direction in which at least one finger of the hand 10 of the user is gripping the real object 1610.

In operation S1840, the electronic device 200 may identify a pre-registered function based on the determined position and gripping direction. For example, based on the hand 10 of the user being positioned between at least two of the first portion 1611, the second portion 1612 and the third portion 1613 as well as the hand 10 of the user gripping from one portion toward another portion, the electronic device 200 may identify a mapped function from among the plurality of pre-registered functions. For example, the pre-registered function may include one of a function for generating a virtual object, a function for deleting the virtual object or a function for setting a characteristic of the virtual object, but the present disclosure is not limited thereto.

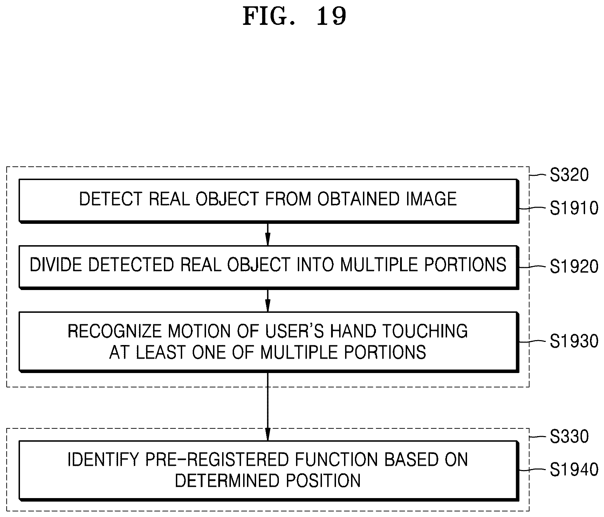

FIG. 19 is a flowchart showing a method of identifying a pre-registered function based on a way that a user's hand is gripping a real object, according to an embodiment of the present disclosure. Redundant descriptions overlapping what are described in FIGS. 1 to 18 will be omitted. For convenience of explanation, FIG. 19 will be described with reference to FIGS. 2 and 15.

Referring to FIG. 19, operation S320 of FIG. 3 may include operations S1910 to S1930. Operation S330 of FIG. 3 may include operation S1940. In an embodiment of the present disclosure, operations S1910 to S1940 may be performed by the electronic device 200 or the processor 250 of the electronic device 200. Detailed operations of operations S330 and S340 according to the present disclosure are not limited to what is depicted in FIG. 19, and one of the operations depicted in FIG. 19 may be omitted or an operation not depicted in FIG. 19 may further be included. The operation S1910 corresponds to operation S1510 of FIG. 15, and operation S1920 corresponds to operation S1520 of FIG. 15, so the detailed description will be omitted.

In operation S1930, the electronic device 200 may recognize (or detect) a motion of the hand 10 of the user touching at least one of the plurality of portions 1411, 1412 and 1413 of the real object 1410. In an embodiment of the present disclosure, the electronic device 200 may track the motion of the hand 10 of the user. In an embodiment of the present disclosure, the electronic device 200 may perform estimation of a pose of the hand 10 of the user. The electronic device 200 may estimate a motion of the hand 10 of the user based on a result of estimating the pose of the hand 10 of the user. For example, the motion of the hand 10 of the user touching at least one of the plurality of portions 1411, 1412 and 1413 of the real object 1410 may include a motion of the hand 10 of the user touching at least one of the plurality of portions 1411, 1412 and 1413 of the real object 1410 as many as a preset number of times or for a preset time.

In operation S1940, the electronic device 200 may identify a preset function based on the recognized motion. For example, the electronic device 200 may recognize (or detect) a motion of the hand 10 of the user touching at least one of the plurality of portions 1411, 1412 and 1413 of the real object 1410 as many as the preset number of times. The electronic device 200 may perform a function for switching to a mode for setting a virtual object, in which to change the color or thickness of the virtual object based on the detected motion.

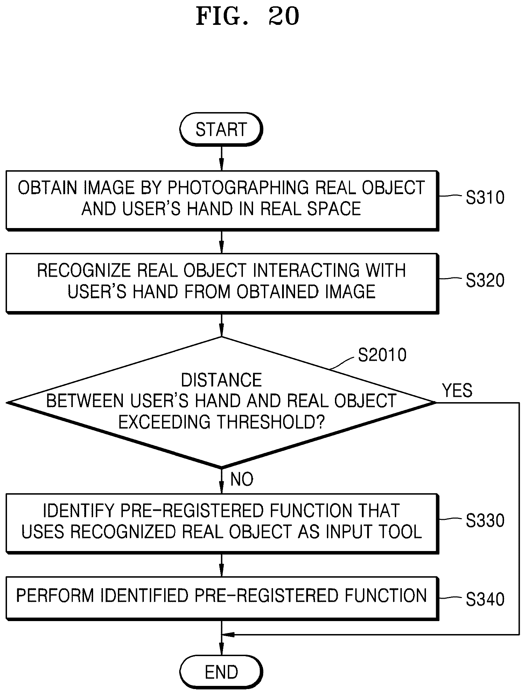

FIG. 20 is a flowchart showing a method of determining whether to perform a predetermined function depending on a distance between the hand 10 of the user and a real object, according to an embodiment of the present disclosure. Redundant descriptions overlapping what are described in FIGS. 1 to 19 will be omitted. For convenience of explanation, FIG. 20 will be described with reference to FIGS. 2 and 3.

Referring to FIG. 20, operations S320 and S330 of FIG. 3 may include operations S2010 in between. In an embodiment of the present disclosure, operation S2010 may be performed by the electronic device 200 or the processor 250 of the electronic device 200.

In operation S2010, the electronic device 200 may determine whether the distance between the hand 10 of the user and the real object exceeds a threshold. The threshold may be determined in advance by a setting of the user or manufacturer. In a case that it exceeds the threshold, the procedure ends. In this case, the electronic device 200 may no longer use the real object as an input tool. In a case that it does not exceed the threshold, the procedure goes to operation S330.

In an embodiment of the present disclosure, the electronic device 200 may measure the distance between the hand 10 of the user and the real object. For example, the electronic device 200 may measure the distance between the recognized hand 10 of the user and the real object by calculating a pixel distance between the hand 10 of the user and the real object. Alternatively, the electronic device 200 may measure the distance between the hand 10 of the user and the real object by using the sensor 220 (e.g., an ultrasound sensor) capable of measuring a distance. In a case that the measured distance does not exceed the predefined threshold, the electronic device 200 may determine to use the real object as an input tool. In a case that the measured distance exceeds the predefined threshold, the electronic device 200 may determine not to use the real object as an input tool.

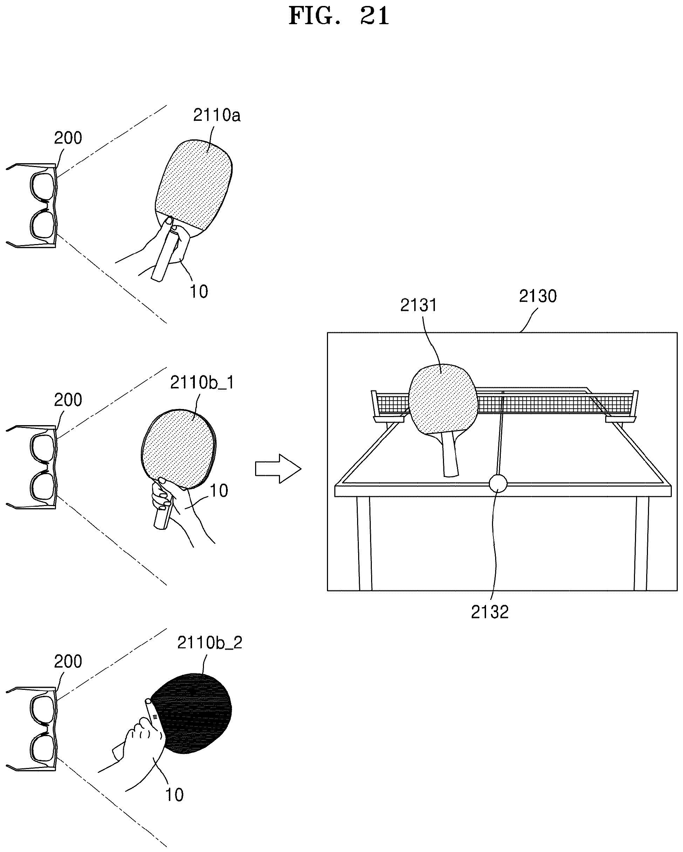

FIG. 21 is a conceptual diagram for describing an operation of performing a function for determining a performance value of a virtual object according to a characteristic of a real object, according to an embodiment of the present disclosure. Redundant descriptions overlapping what are described in FIGS. 1 to 20 will be omitted. For convenience of explanation, FIG. 21 will be described with reference to FIG. 2.

Referring to FIG. 21, the electronic device 200 may detect a real object 2110a, 2110b or 2110c and the hand 10 of the user from an image. For example, as depicted in FIG. 21, the real object 2110a, 2110b or 2110c may be a table tennis racket, but the present disclosure is not limited thereto, and the real object may be any object that may be gripped by the hand 10 of the user. The electronic device 200 may detect at least one of the color, the texture and the form of at least a portion of the real object 2110a, 2110b_1 or 2110b_2, the form of the hand 10 of the user and the position of the hand 10 of the user.

In an embodiment of the present disclosure, the electronic device 200 may classify the type of the real object 2110a, 2110b_1 or 2110b_2. For example, the electronic device 200 may classify whether the table tennis racket, which is the real object 2110a, 2110b_1 or 2110b_2, is a pen-holder racket (e.g., the real object 2110a) or a shake-hand racket (e.g., the real object 2110b_1 or 2110b_2). In an embodiment of the present disclosure, the electronic device 200 may use an Al model having an image including the real object 2110a, 2110b_1 or 2110b_2 as an input to classify the type of the real object 2110a, 2110b_1 or 2110b_2. In an embodiment of the present disclosure, the electronic device 200 may classify the type of the real object 2110a, 2110b_1 or 2110b_2 based on a way that the hand 10 of the user is gripping the real object 2110a, 2110b_1 or 2110b_2. For example, the electronic device 200 may identify the way that the hand 10 of the user is gripping the real object 2110a, 2110b_1 or 2110b_2 by performing estimation of a pose of the hand 10 of the user.

In an embodiment of the present disclosure, the electronic device 200 may detect (or classify) the texture of at least a portion of the real object 2110a, 2110b_1 or 2110b_2. For example, the electronic device 200 may classify whether a rubber of a paddle face of the table tennis racket, which is the real object 2110a, 2110b_1 or 2110b_2, is a flat rubber or a protruding rubber. In an embodiment of the present disclosure, the electronic device 200 may classify the texture of the at least a portion of the real object 2110a, 2110b_1 or 2110b_2, by using an AI model having an image including the real object 2110a, 2110b_1 or 2110b_2 as an input.

In an embodiment of the present disclosure, the electronic device 200 may detect (or classify) the color of at least a portion of the real object 2110a, 2110b_1 or 2110b_2. For example, the electronic device 200 may classify whether the color of the paddle face of the table tennis racket, which is the real object 2110a, 2110b_1 or 2110b_2, is a red color or a block color. For example, the first side of the table tennis racket (e.g., the real object 2110b_1) may have a red color, and the second side (the real object 2110b_2) may have a black color. In an embodiment of the present disclosure, the electronic device 200 may classify the color of the at least a portion of the real object 2110a, 2110b_1 or 2110b_2 by using an AI model having an image including the real object 2110a, 2110b_1 or 2110b_2 as an input.

In an embodiment of the present disclosure, the electronic device 200 may determine a performance value of a virtual object 2131 or 2132 corresponding to the real object 2110a, 2110b_1 or 2110b_2 based on a result of the detecting. For example, based on whether the real object 2110a, the table tennis racket is the pen-holder racket or the shake-hand racket, a predetermined performance value may be determined. For example, the electronic device 200 may access a mapping table stored in the memory 260 (or storage) or an external device connected for communication to the electronic device 200. For example, the mapping table may include relationship information between the performance value and the type of the table tennis racket. In an embodiment of the present disclosure, the mapping table may be determined in advance according to settings of the user or manufacturer. Based on the mapping table, the electronic device 200 may determine a performance value mapped to each racket type to be the performance value of the virtual object 2131. For example, the pen-holder racket may be mapped to a first spin value and a first power value, and the shake-hand racket may be mapped to a second spin value and a second power value. The first spin value may be different from the second spin value, and for example, the first spin value may be smaller than the second spin value. The first power value may also be different from the second power value, and for example, the first power value may be larger than the second power value.

For example, based on the texture of at least a portion of the real object 2110a, which is the real object 2110a, 2110b_1 or 2110b_2, a predetermined performance value may be determined. For example, the electronic device 200 may access a mapping table stored in the memory 260 (or storage) or an external device connected for communication to the electronic device 200. For example, the mapping table may include relationship information between the performance value and the texture of the paddle face of the table tennis racket. In an embodiment of the present disclosure, the mapping table may be determined in advance according to settings of the user or manufacturer. Based on the mapping table, the electronic device 200 may determine a performance value mapped to each texture of the paddle face of the table tennis racket to be the performance value of the virtual object 2131. For example, the protruding rubber may be mapped to a third power value and the flat rubber may be mapped to a fourth power value. The third power value may be different from the fourth power value, and for example, the third power value may be larger than the fourth power value.

For example, based on the color of at least a portion of the real object 2110a, 2110b_1 or 2110b_2, a predetermined performance value may be determined. For example, the electronic device 200 may access a mapping table stored in the memory 260 (or storage) or an external device connected for communication to the electronic device 200. For example, the mapping table may include relationship information between the performance value and the color of the paddle face of the table tennis racket. In an embodiment of the present disclosure, the mapping table may be determined in advance according to settings of the user or manufacturer. Based on the mapping table, the electronic device 200 may determine a performance value mapped to each color of the paddle face of the table tennis racket to be the performance value of the virtual object 2131. For example, the paddle face of a red color may be mapped to the third spin value and a fifth power value, and the paddle face of a black color may be mapped to the fourth spin value and a sixth power value. The third spin value may be different from the fourth spin value, and for example, the third spin value may be larger than the fourth spin value. The fifth power value may also be different from the sixth power value, and for example, the fifth power value may be smaller than the sixth power value.

In an embodiment of the present disclosure, the electronic device 200 may display a virtual reality game 2130 through the display 244 or a display of an external device connected for communication to the electronic device 200. For example, as depicted in FIG. 21, the virtual reality game 2130 may be a table tennis game, but the present disclosure is not limited thereto, and the virtual reality game may be a game that uses any object that may be gripped by the hand 10 of the user. The virtual reality game 2130 may include virtual objects 2131 and 2132.

In an embodiment of the present disclosure, the electronic device 200 may track the motion of at least a portion of the real object 2110a, 2110b_1 or 2110b_2. Based on a result of the tracking corresponding to the motion of the real object 2110a, 2110b_1 or 2110b_2, the electronic device 200 may display the corresponding motion of the virtual object 2131. Along with the motion of the virtual object 2131, the virtual object 2131 may collide with another virtual object 2132. Based on at least one of the speed, direction and position of the motion of the real object 2110a, 2110b_1 or 2110b_2, and the determined performance value of the virtual object 2131, the electronic device 200 may calculate the physical quantity after the collision of the virtual object 2132. Based on the calculated physical quantity, the electronic device 200 may determine at least one of the speed, direction, position and spin direction of the motion of the virtual object 2132.

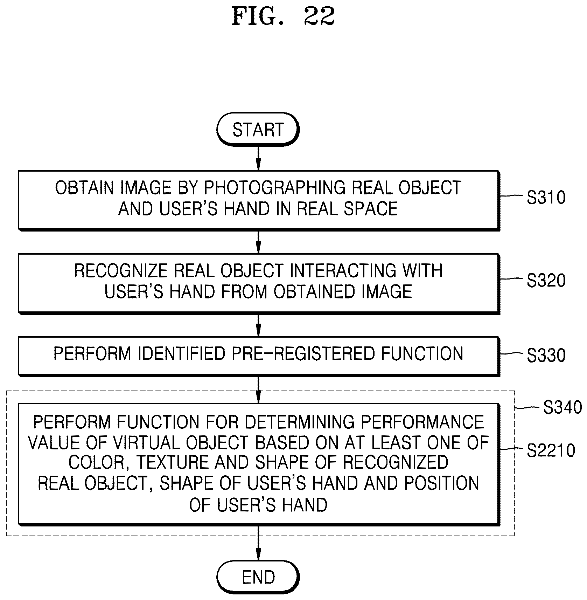

FIG. 22 is a flowchart showing a method of determining a performance value of a virtual object according to a characteristic of a real object, according to an embodiment of the present disclosure. Redundant descriptions overlapping what are described in FIGS. 1 to 21 will be omitted. For convenience of explanation, FIG. 22 will be described with reference to FIGS. 2, 3 and 21.

Referring to FIG. 22, operation S340 of FIG. 3 may include operation S2210. In an embodiment of the present disclosure, operation S2210 may be performed by the electronic device 200 or the processor 250 of the electronic device 200. Detailed operations of operation S340 according to the present disclosure are not limited to what is depicted in FIG. 22, and one of the operations depicted in FIG. 22 may be omitted or an operation not depicted in FIG. 22 may further be included.

In operation S2210, based on at least one of the color, the texture and the form of at least a portion of the real object 2110a, 2110b_1 or 2110b_2, the form of the hand 10 of the user and the position of the hand 10 of the user, the electronic device 200 may perform a function for determining a performance value of a virtual object. The present disclosure is not, however, limited thereto, and the performance value of the virtual object 2131 may be determined based on an arbitrary characteristic of the real object 2110a, 2110b_1 or 2110b_2 that may be obtained from an image. In an embodiment of the present disclosure, relationship information between the arbitrary characteristic of the real object 2110a, 2110b_1 or 2110b_2 and the performance value may be included in advance in the mapping table stored in the memory 260 (or storage) of the electronic device 200 or an external device connected for communication to the electronic device 200.

In an embodiment of the present disclosure, the electronic device 200 may track the motion of at least a portion of the real object 2110a, 2110b_1 or 2110b_2. The electronic device 200 may display the motion of the virtual object 2131 according to a result of the tracking on the display 244. The electronic device 200 may calculate a first physical quantity corresponding to the motion of the virtual object 2131 based on the determined performance value. Based on the first physical quantity, the electronic device 200 may calculate a second physical quantity, which is a physical quantity after collision of the other virtual object 2132 that collides with the virtual object 2131. For example, the electronic device 200 may calculate the speed, rotation speed or collision angle of the virtual object 2131 based on the determined performance value, and based on the speed, rotation speed or collision angle of the virtual object 2131, calculate the speed, rotation speed or direction after collision of the virtual object 2132. The electronic device 200 may use the well-known law of physics (e.g., conservation of momentum) to calculate the first and second physical quantities.

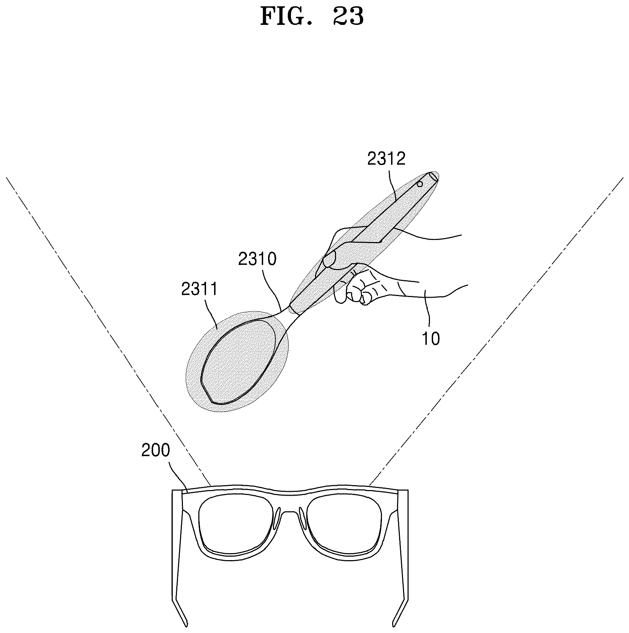

FIG. 23 is a conceptual diagram for describing an operation of using a real object similar to a virtual object to be mapped as an input tool, according to an embodiment of the present disclosure. Redundant descriptions overlapping what are described in FIGS. 1 to 22 will be omitted. For convenience of explanation, FIG. 23 will be described with reference to FIGS. 2 and 21.

Referring to FIG. 23, a purpose and function of a real object 2310 is different from that of the virtual object 2131 of the virtual reality game 2130, but the shape and form of the real object 2310 may be similar to the shape and form of the virtual object 2131. For example, similar to the shape of the virtual object 2131, the real object 2310 may include a paddle face 2311 and a handle 2312. The real object 2310 may be used as an input tool of the electronic device 200 to be used for the same purpose as the virtual object 2131. For example, the electronic device 200 may obtain a video including the real object 2310. The electronic device 200 may detect the real object 2310 and the hand 10 of the user gripping the real object 2310. The electronic device 200 may track the motion of at least a portion (e.g., the paddle face 2311) of the real object 2310 based on a result of the detecting. The electronic device 200 may display the motion of the virtual object 2131 mapped to the real object 2310 on the display 244 based on a result of the tracking.

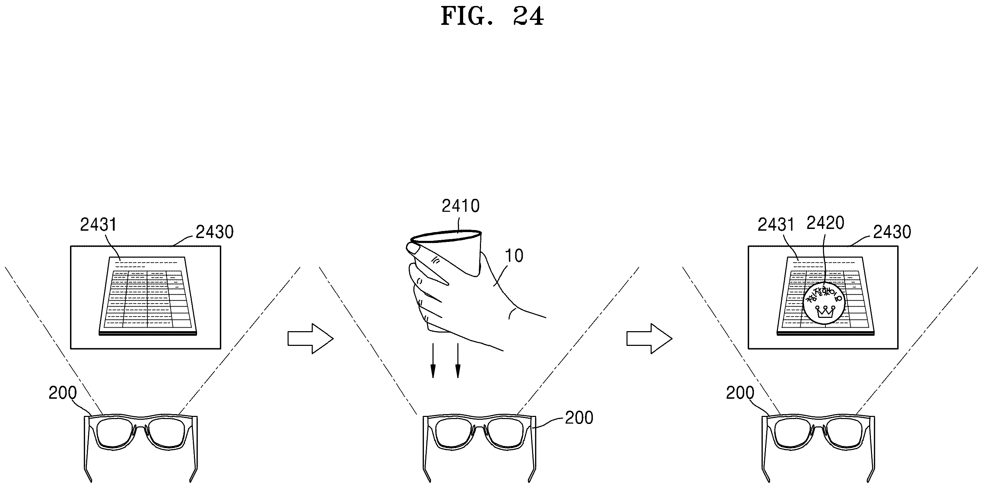

FIG. 24 is a conceptual diagram for describing an operation of generating a virtual object based on a predetermined motion, according to an embodiment of the present disclosure. Redundant descriptions overlapping what are described in FIGS. 1 to 23 will be omitted. For convenience of explanation, FIG. 24 will be described with reference to FIG. 2.

Referring to FIG. 24, the electronic device 200 may obtain a real image 2430 including a third real object 2431. For example, although the third real object 2431 is depicted as a document in FIG. 24, the present disclosure is not limited thereto. The electronic device 200 may obtain an image including a fourth real object 2410 and the hand 10 of the user through the camera 210 of the electronic device 200. The electronic device 200 may detect the fourth real object 2410 and the hand 10 of the user from the obtained image. The electronic device 200 may detect the motion of the recognized fourth real object 2410. The electronic device 200 may determine whether the detected motion is a predetermined motion. The electronic device 200 may perform a function for generating a predetermined virtual object 2420 based on determining that the detected motion is the predetermined motion. For example, the virtual object 2420 may be the user's signature or an arbitrary stamp. For example, a motion of the fourth real object 2410 that triggers a function of the electronic device 200 may be set in advance by a setting of the user or manufacturer. For example, the electronic device 200 may trigger a function of the electronic device 200 based on at least one of speed, a direction and a distance moved by the fourth real object 2410, and the number of movements. For example, the virtual object 2420 may be set in advance by a setting of the user or manufacturer.

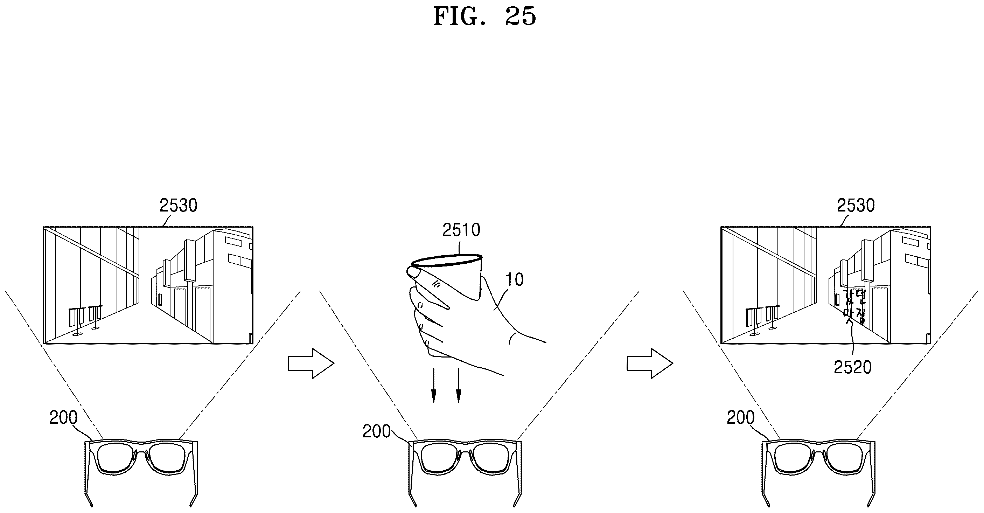

FIG. 25 is a conceptual diagram for describing an operation of generating a virtual object based on a predetermined motion, according to an embodiment of the present disclosure. Redundant descriptions overlapping what are described in FIGS. 1 to 24 will be omitted. For convenience of explanation, FIG. 25 will be described with reference to FIG. 2.

Referring to FIG. 25, the electronic device 200 may obtain a real image 2530. For example, although the real image 2530 is depicted as an image captured of a real place in FIG. 25, the present disclosure is not limited thereto. The electronic device 200 may obtain an image including a real object 2510 and the hand 10 of the user. The electronic device 200 may detect the real object 2510 and the hand 10 of the user from the image. The electronic device 200 may detect a motion of the recognized real object 2510. The electronic device 200 may determine whether the detected motion is a predetermined motion. The electronic device 200 may perform a function for generating a predetermined virtual object 2520 based on determining that the detected motion is the predetermined motion. For example, the virtual object 2520 may be a stamp corresponding to the person's assessment of a place. According to an embodiment of the present disclosure, the user may intuitively check his/her assessment of the place he has ever been to.

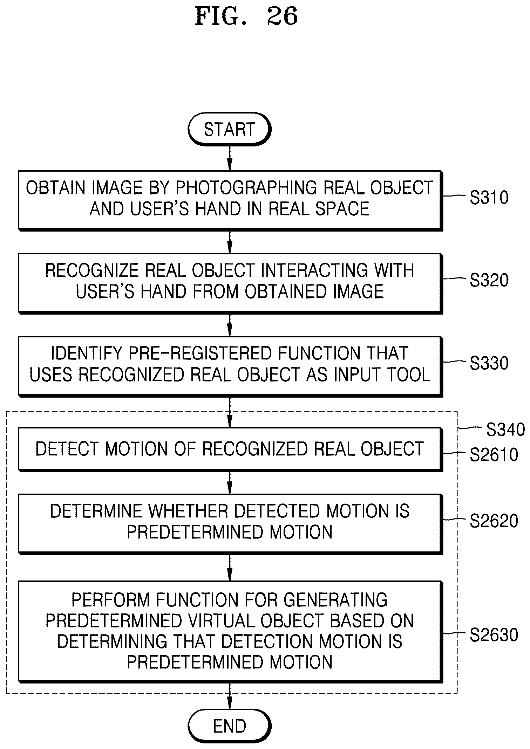

FIG. 26 is a flowchart showing a method of generating a virtual object based on a predetermined motion, according to an embodiment of the present disclosure. Redundant descriptions overlapping what are described in FIGS. 1 to 25 will be omitted. For convenience of explanation, FIG. 26 will be described with reference to FIGS. 2, 3 and 24.

Referring to FIG. 26, operation S340 of FIG. 3 may include operations S2610 to S2630. In an embodiment of the present disclosure, operations S2610 to S2630 may be performed by the electronic device 200 or the processor 250 of the electronic device 200. Detailed operations of operation S340 according to the present disclosure are not limited to what is depicted in FIG. 26, and one of the operations depicted in FIG. 26 may be omitted or an operation not depicted in FIG. 26 may further be included.

In operation S2610, the electronic device 200 may detect a motion of the recognized real object. In an embodiment of the present disclosure, the electronic device 200 may track the motion of at least a portion of the real object. In an embodiment of the present disclosure, the electronic device 200 may detect a motion of the object through key point matching of objects in a plurality of image frames. In an embodiment of the present disclosure, the electronic device 200 may track the motion of at least one of the real object 2410 and the hand 10 of the user. The electronic device 200 may determine whether a predetermined motion has occurred, based on a result of the tracking.

In operation S2620, the electronic device 200 may determine whether the detected motion is a predetermined motion. For example, a motion of the real object 2410 may be determined in advance based on at least one of the speed, direction and distance moved by the real object 2410 and the number of movements.

In operation S2630, the electronic device 200 may perform a function for generating the predetermined virtual object 2420 based on determining that the detected motion is the predetermined motion. The electronic device 200 may display the virtual object 2420 through the display 244 or a display of an external device. In an embodiment of the present disclosure, the electronic device 200 may generate the virtual object 2420 at a point (or coordinates) of the real image 2530 corresponding to a position where there is a motion of the real object 2410.

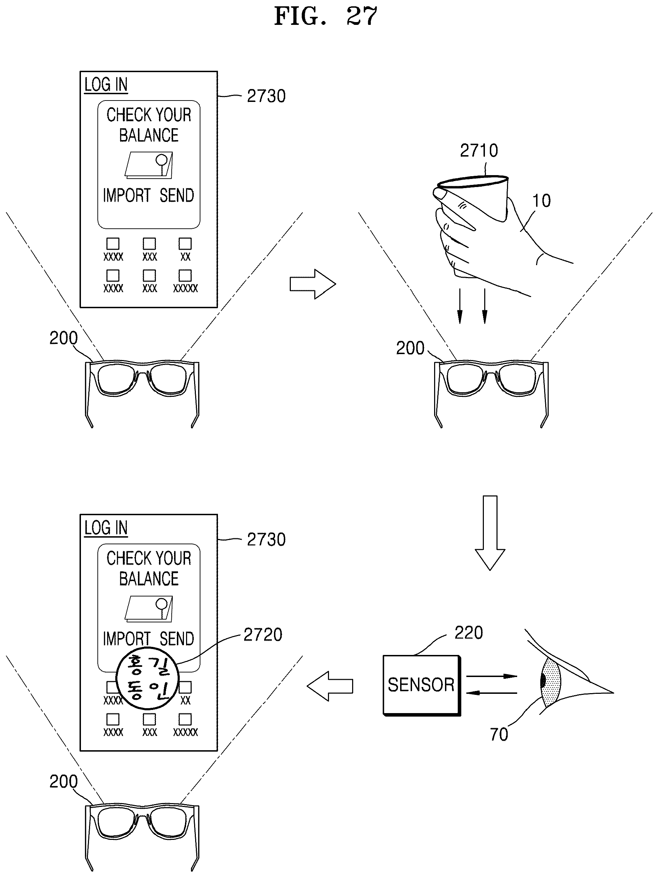

FIG. 27 is a conceptual diagram for describing an operation of generating a virtual object based on a predetermined motion and a personal authentication input, according to an embodiment of the present disclosure. Redundant descriptions overlapping what are described in FIGS. 1 to 26 will be omitted. For convenience of explanation, FIG. 27 will be described with reference to FIG. 2.

Referring to FIG. 27, the electronic device 200 may display, through the display 244, a security document screen 2730 to request the user to sign. The electronic device 200 may obtain an image including a real object 2710 and the hand 10 of the user. The electronic device 200 may detect the real object 2710 and the hand 10 of the user from the image obtained through the camera 210 of the electronic device 200. The electronic device 200 may determine whether a predetermined motion of the real object 2710 has occurred. Based on determining that the predetermined motion has occurred, the electronic device 200 may activate an authentication mode for requesting a personal authentication input. In an embodiment of the present disclosure, the authentication mode may be an iris authentication mode. For example, the electronic device 200 may recognize the user's iris 70 by using the sensor 220 (e.g., an iris sensor). For example, in a case that the electronic device 200 is a VR device or an AR device, the sensor 220 may include a left-eye sensor and a right-eye sensor. The left-eye sensor may be arranged toward an iris of the left eye of the user, and the right-eye sensor may be arranged toward an iris of the right eye of the user. The electronic device 200 may generate a predetermined virtual object 2720 in response to a personal authentication input. For example, the electronic device 200 may compare an iris recognition result with pre-stored user information. Based on determining that the iris recognition result is matched to the user information, the electronic device 200 may generate the predetermined virtual object 2720. For example, the predetermined virtual object 2720 may be a pre-stored signature, seal or registered seal of the user. The electronic device 200 may display the predetermined virtual object 2720 along with the security document screen 2730 on the display 244.

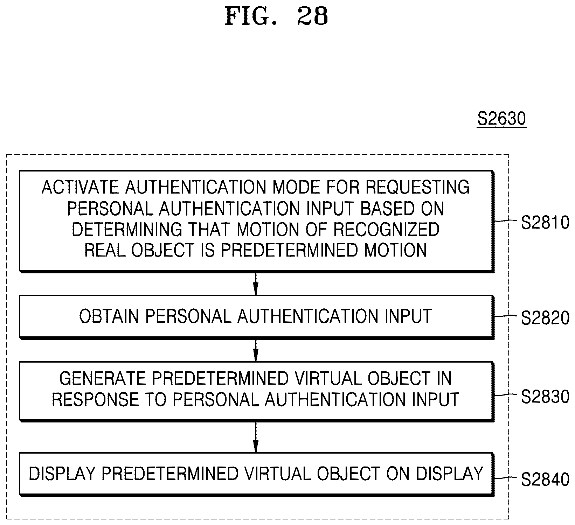

FIG. 28 is a flowchart showing a method of generating a virtual object based on a predetermined motion and a personal authentication input, according to an embodiment of the present disclosure. Redundant descriptions overlapping what are described in FIGS. 1 to 27 will be omitted. For convenience of explanation, FIG. 28 will be described with reference to FIGS. 2, 26 and 27.

Referring to FIG. 28, operation S2630 of FIG. 26 may include operations S2810 to S2840. In an embodiment of the present disclosure, operations S2810 to S2840 may be performed by the electronic device 200 or the processor 250 of the electronic device 200. Detailed operations of operation S2630 according to the present disclosure are not limited to what is depicted in FIG. 28, and one of the operations depicted in FIG. 28 may be omitted or an operation not depicted in FIG. 28 may further be included.

In operation S2810, the electronic device 200 may activate the authentication mode for requesting a personal authentication input based on determining that the recognized motion of the real object 2710 is a predetermined motion.

In operation S2820, the electronic device 200 may obtain the personal authentication input by using the sensor 220. For example, the sensor 220 may be an iris recognition sensor, but the present disclosure is not limited thereto and the sensor may be any sensor capable of checking the identity of the user. For example, the personal authentication input may be iris recognition data of the user, but the present disclosure is not limited thereto, and the personal authentication input may correspond to arbitrary data sensed by the sensor 220.

In operation S2830, the electronic device 200 may generate the predetermined virtual object 2720 in response to the personal authentication input. The electronic device 200 may generate the virtual object 2720 stored in the memory 260. For example, a position of the generated virtual object 2720 may be a place (or coordinates) of the security document screen 2730 corresponding to where a motion of the real object 2710 occurs, but may vary depending on the user input.

In operation S2840, the electronic device 200 may display the predetermined virtual object 2720 on the display 244. The electronic device 200 may synthesize the virtual object 2720 on the security document screen 2730 displayed on the display 244.

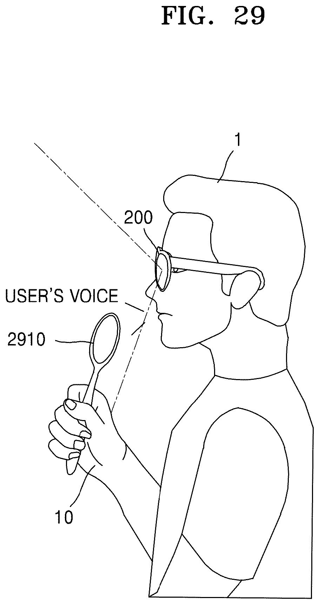

FIG. 29 is a conceptual diagram for describing an operation of performing a function for activating a predetermined sensor based on a detection result, according to an embodiment of the present disclosure. Redundant descriptions overlapping what are described in FIGS. 1 to 28 will be omitted. For convenience of explanation, FIG. 29 will be described with reference to FIG. 2.

Referring to FIG. 29, the electronic device 200 may be an AR device to be worn by the user 1. The real object 2910 may be gripped by the hand 10 of the user 1. The electronic device 200 may obtain a video including a scene in which the hand 10 of the user 1 is gripping a real object 2910 by using the camera 210. The electronic device 200 may detect the real object 2910 and the hand 10 of the user 1 based on the video. The electronic device 200 may identify the type of the detected real object 2910. For example, the electronic device 200 may obtain the type of the real object 2910 by using an Al model (e.g., an object classification model) having a video as an input. For example, as depicted in FIG. 29, the electronic device 2910 may identify that the real object 2910 is a spoon. Furthermore, the electronic device may identify that the hand 10 of the user 1 is gripping the real object 2910.

The electronic device 200 may perform a function for activating the predetermined at least one sensor 220 based on a result of the detecting. For example, the electronic device 200 may activate the microphone 242 based on identifying that the hand 10 of the user 1 is gripping the real object 2910, which is a spoon. The electronic device 200 may access a mapping table stored in the memory 260 (or storage) or an external device. For example, the mapping table may include relationship information between the type of the real object 2910 and a sensor to be activated. For example, the spoon may be mapped to the microphone 242. In an embodiment of the present disclosure, the mapping table may be determined in advance according to a setting of the user or manufacturer. The electronic device 200 may determine to activate the sensor mapped to the type of the real object 2910 based on the mapping table. The electronic device 200 may receive the user's voice by using the activated microphone 242.

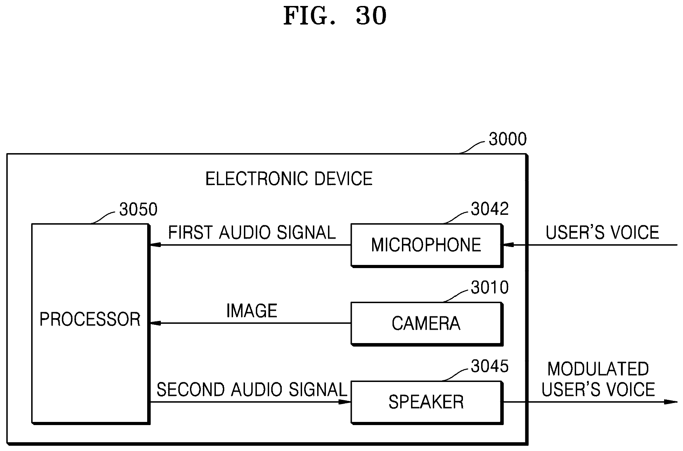

FIG. 30 is a block diagram for describing operations of an electronic device, according to an embodiment of the present disclosure. Redundant descriptions overlapping what are described in FIGS. 1 to 29 will be omitted. A configuration, operation and function of an electronic device 3000 may correspond to the configuration, operation and function of the electronic device 200 of FIG. 2.

Referring to FIG. 30, the electronic device 3000 may include a microphone 3042, a camera 3010, a speaker 3045 and a processor 3050. However, the components depicted in FIG. 30 are not integral elements, and the electronic device 3000 may dispense with some of the components depicted in FIG. 30 or further include an additional component. For example, as depicted in FIG. 2, the electronic device 3000 according to an embodiment of the present disclosure may further include at least one of the camera 210, the sensor 220, the communication interface 230, the user interface 240 and the memory 260. Configurations, operations and functions of the microphone 3042, the camera 3010, the speaker 3045 and the processor 3050 correspond to the configurations, operations and functions of the microphone 242, the camera 210, the speaker 245 and the processor 250 of FIG. 2, so the redundant description will be omitted.

The camera 3010 may photograph (or capture) a scene including the hand 10 of the user and a real object, and generate a corresponding image or video. The processor 3050 may detect the hand of the user and the real object from the taken (or captured) image or video. The processor 3050 may activate the microphone 3042 mapped to the real object based on a result of the detecting.

The activated microphone 3042 may receive the user's voice. The microphone 3042 may sample and convert the user's analog voice to a digital signal. The microphone 3042 may send a first audio signal resulting from the conversion of the user's voice to the digital signal to the processor 3050. The processor 3050 may modulate the first audio signal based on the type of the real object. For example, the processor 3050 may emphasize or suppress a certain frequency band of the first audio signal by using a frequency band filter. For example, the processor 3050 may control a time scale or sound volume of the first audio signal. For example, the processor 3050 may add a sound effect by performing sound synthesis on the first audio signal.

In an embodiment of the present disclosure, the processor 3050 may determine a modulation scheme for the first audio signal based on a characteristic of the real object. In an embodiment of the present disclosure, the processor 3050 may access a mapping table stored in the memory (or storage) or an external device. For example, the mapping table may include relationship information between the type of the real object 2910 and the audio modulation scheme. For example, the spoon may be mapped to a grand and loud voice, a razor to a sharp voice, a toy to a cute voice, and a hot dog to a fat character's voice. In an embodiment of the present disclosure, the mapping table may be determined in advance according to a setting of the user or manufacturer. Based on the mapping table, the processor 3050 may determine to modulate the first audio signal in an audio modulation scheme mapped to the type of the real object 2910. The processor 3050 may generate a second audio signal modulated from the first audio signal.

The speaker 3045 may receive the second audio signal from the processor 3050. The speaker 3045 may convert the second audio signal to an analog signal. The speaker 3045 may output a modulated user voice, which is the converted analog signal, into space.

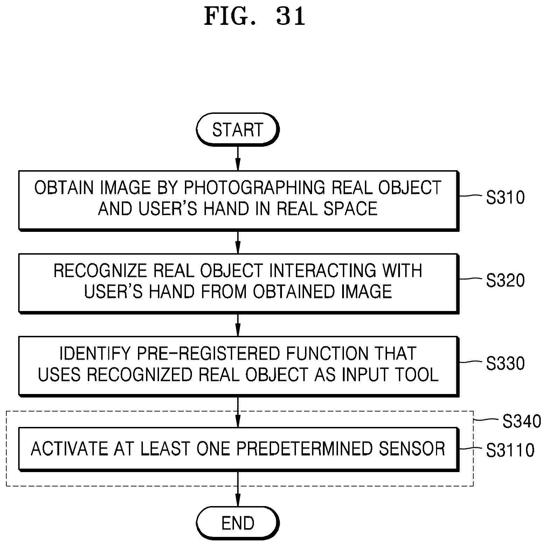

FIG. 31 is a flowchart showing a method of performing a function for activating a predetermined sensor based on a detection result, according to an embodiment of the present disclosure. Redundant descriptions overlapping what are described in FIGS. 1 to 27 will be omitted. For convenience of explanation, FIG. 31 will be described with reference to FIGS. 2, 3 and 30.

Referring to FIG. 31, operation S340 of FIG. 3 may include operation S3110. In an embodiment of the present disclosure, operation S3110 may be performed by the electronic device 200 or 3000 or the processor 250 or 3050 of the electronic device 200 or 3000.

In operation S3110, the electronic device 3000 may perform a function for activating the at least one predetermined sensor. In an embodiment of the present disclosure, the electronic device 3000 may obtain sensor data by using at least one activated sensor. In an embodiment of the present disclosure, the electronic device 3000 may modulate the sensor data based on at least some of the form, shape, color, texture and function of the real object.

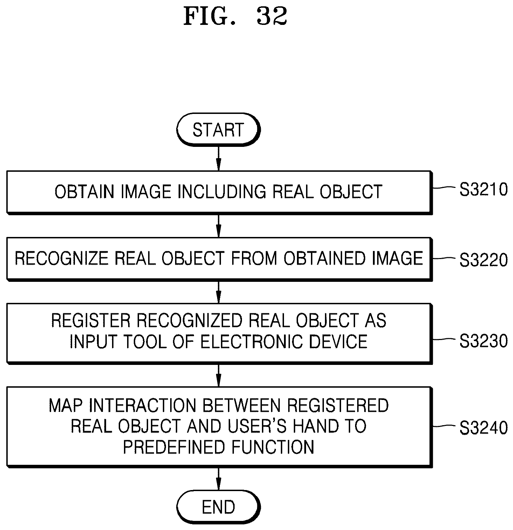

FIG. 32 is a flowchart showing a method of registering a real object as an input tool of an electronic device, according to an embodiment of the present disclosure. Redundant descriptions overlapping what are described in FIGS. 1 and 31 will be omitted. For convenience of explanation, FIG. 32 will be described with reference to FIG. 2.

Referring to FIG. 32, the method of registering a real object as an input tool of the electronic device 200 may include operations S3210 to S3240. In an embodiment of the present disclosure, operations S3210 to S3240 may be performed by the electronic device 200 or the processor 250 of the electronic device 200. The method by which the electronic device 200 uses the real object as an input tool according to an embodiment of the present disclosure is not limited to what is depicted in FIG. 32, and one of the operations depicted in FIG. 32 may be omitted or an operation not depicted in FIG. 32 may further be included.

In operation S3210, the electronic device 200 may obtain at least one image including a real object (which is not in communication with the electronic device 200). In an embodiment of the present disclosure, the electronic device 200 may obtain at least one image including a real object by using the camera 210.

In operation S3220, the electronic device 200 may recognize (or detect) the real object based on the at least one image. In an embodiment of the present disclosure, the electronic device 200 may obtain data including position information and edge information of the real object by using an Al model having at least one image as an input. In an embodiment of the present disclosure, the electronic device 200 may obtain data including the type of the real object by using an Al model having at least one image as an input. In an embodiment of the present disclosure, an Al model having at least one image as an input may be used to obtain data resulting from 3D rendering of the real object. For example, the 3D rendered data may include shape data, structure data, color data and/or texture data of the real object required to display the real object on the display 244.

In operation S3230, the electronic device 200 may register (or store) the real object as an input tool of the electronic device 200. The electronic device 200 may store data including information regarding the real object in the memory 260. In an embodiment of the present disclosure, in a case that the electronic device 200 detects a registered real object, the electronic device 200 may perform a function mapped to the real object.

In operation S3240, the electronic device 200 may map an interaction between the registered real object and the hand 10 of the user to a predefined function. In an embodiment of the disclosure, the at least one image may include the hand 10 of the user gripping an object. The electronic device 200 may detect the hand 10 of the user from at least one image. Based on at least one of the shape of the real object, the shape of the hand 10 of the user, and interaction between the hand 10 of the user and the real object, the electronic device 200 may map the real object to a predefined function that uses the real object as the input tool. The electronic device 200 may store a mapping table including relation information between at least one of the shape of the real object, the shape of the hand 10 of the user, and an interaction between the hand 10 of the user and the real object, and a predefined function in the memory 260. In an embodiment of the present disclosure, in a case that the electronic device 200 detects at least one of the shape of the real object, the shape of the hand 10 of the user, and the interaction between the hand 10 of the user and the real object, which corresponds to a registered and predefined function, the electronic device 200 may identify and perform the registered and predefined function.

In an embodiment of the present disclosure, the electronic device 200 may divide the real object into a plurality of portions. The electronic device 200 may detect at least one portion occluded by the hand 10 of the user from among the plurality of portions. The electronic device 200 may register a predefined function that uses the real object as an input tool, based on the at least one occluded portion. The electronic device 200 may store a mapping table including relation information between at least one portion occluded by the hand 10 of the user among the plurality of portions of the real object and a predefined function in the memory 260. In an embodiment of the present disclosure, in a case that the electronic device 200 detects, from among the plurality of portions, at least one portion occluded by the hand 10 of the user that corresponds to a registered and predefined function, the electronic device 200 may identify and perform the registered and predefined function.

In an embodiment of the present disclosure, the electronic device 200 may divide the real object into a plurality of portions. Based on a result of the dividing, the electronic device 200 may determine a position where the hand 10 of the user is gripping the real object. The electronic device 200 may register a predefined function that uses the real object as an input tool, based on the determined position. The electronic device 200 may store a mapping table including relationship information between the position where the hand 10 of the user is gripping the real object and the predefined function in the memory 260. In an embodiment of the present disclosure, in a case that the electronic device 200 detects a position where the hand 10 of the user is gripping the real object, which corresponds to a registered and predefined function, the electronic device 200 may identify and perform the registered and predefined function.

In an embodiment of the present disclosure, the electronic device 200 may determine a gripping direction that indicates toward which portion of the plurality of portions of the real object the hand 10 of the user is gripping the real object. The electronic device 200 may register a predefined function based on the determined gripping direction. The electronic device 200 may store a mapping table including relationship information between at least one of the gripping direction and the gripping position in which the hand 10 of the user is gripping the real object and the predefined function in the memory 260. In an embodiment of the present disclosure, in a case that the electronic device 200 detects at least one of the gripping direction and gripping position in which the hand 10 of the user is gripping the real object, which corresponds to the registered and predefined function, the electronic device 200 may identify and perform the registered and predefined function.

In an embodiment of the present disclosure, the electronic device 200 may detect an operation of the hand 10 of the user touching at least one of the plurality of portions. The electronic device 200 may register a predefined function that uses the real object as an input tool, based on the detected operation. The electronic device 200 may store a mapping table including relationship information between an operation of the hand 10 of the user gripping at least one of the plurality of portions and a predefined function in the memory 260. In an embodiment of the present disclosure, in a case that the electronic device 200 detects an operation of the hand 10 of the user touching at least one of the plurality of portions, which corresponds to a registered and predefined function, the electronic device 200 may identify and perform the registered and predefined function.

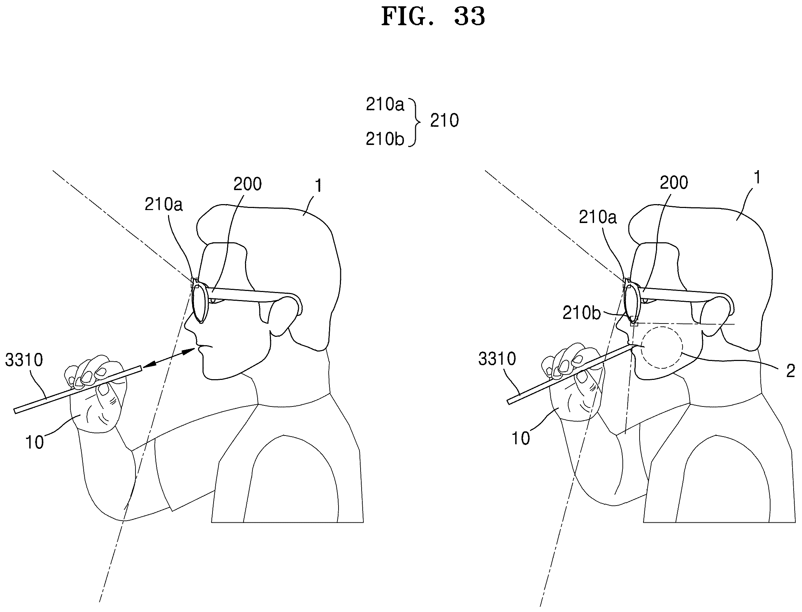

FIG. 33 is a conceptual diagram for describing a method of performing a pre-registered function based on a motion of a user's cheek or a shape of the user's cheek, according to an embodiment of the present disclosure. Redundant descriptions overlapping what are described in FIGS. 1 to 32 will be omitted. For convenience of explanation, FIG. 33 will be described with reference to FIG. 2.

Referring to FIG. 33, the electronic device 200 may use a first camera 210a to obtain an image by photographing a real object 3310 and the hand 10 of the user 1 in a real space. The electronic device 200 may recognize the real object 3310 interacting with the hand 10 of the user 1 from the image. In an embodiment of the present disclosure, the electronic device 200 may recognize the real object 3310 gripped by the hand 10 of the user 1. Although the real object 3310 is depicted as a straw in FIG. 33, the present disclosure is not limited thereto, and the real object 3310 may be any object that may be gripped by the person's hand.

In an embodiment of the present disclosure, the electronic device 200 may obtain (measure or estimate) a distance between the real object 3310 and the mouth of the user 1. For example, the electronic device 200 may obtain the distance between the real object 3310 and the mouth of the user 1 by calculating a pixel distance between the real object 3310 and the mouth of the user 1 from the obtained image. Alternatively, the electronic device 200 may obtain the distance between the real object 3310 and the mouth of the user 1 by using the sensor 220 (e.g., an ultrasound sensor) capable of measuring a distance. The electronic device 200 may determine whether the distance between the real object 3310 (or one end of the real object 3310) and the mouth of the user 1 is smaller than or equal to a predefined threshold. Based on determining that the distance between the real object 3310 and the mouth of the user is smaller than or equal to the predefined threshold, the electronic device 200 may determine to use the real object 3310 as an input tool to perform a pre-registered function.

In an embodiment of the present disclosure, based on determining to use the real object 3310 as an input tool to perform a pre-registered function, the electronic device 200 may activate a second camera 210b. The electronic device 200 may obtain an image taken of a cheek 2 of the user 1 by using the second camera 210b. The second camera 210b may be arranged in the electronic device 200 to have a viewing angle at which to take an image of the cheek 2 of the user 1.

The electronic device 200 may detect an inhaling (inspiratory) or exhaling (expiratory) operation while the user 1 brings the real object 3310 close to the mouth of the user 1. In an embodiment of the present disclosure, the electronic device 200 may detect a motion of the cheek 2 of the user 1 or the shape of the cheek 2 of the user 1 from the image. For example, the electronic device 200 may detect a puff-out motion of the cheek 2 of the user 1 or a puffed-out shape of the cheek 2 of the user 1. For example, the electronic device 200 may detect suck-in motion of the cheek 2 of the user 1 or the sucked-in shape of the cheek 2 of the user 1.

In an embodiment of the present disclosure, the electronic device 200 may receive a breathing sound of the user 1 by using a microphone. The microphone may convert the breathing sound of the user 1 to an audio signal, which is an electric signal. The electronic device 200 may classify the audio signal corresponding to the breathing sound into one of an inspiratory sound or an expiratory sound. In this case, the second camera 210b may be omitted.

In an embodiment of the present disclosure, the electronic device 200 may include the camera 210. The camera 210 may include the first camera 210a. The direction of the first camera 210a may correspond to a direction in which the eyes of the user 1 is looking. The first camera 210a may photograph the hand 10 of the user 1 and the real object 3310 in front of the user 1. The camera 210 may include the second camera 210b. The second camera 210b may be arranged in the electronic device 200 to have a viewing angle at which to take an image of the cheek 2 of the user 1. The second camera 210b may take an image of the cheek 2 of the user 1.

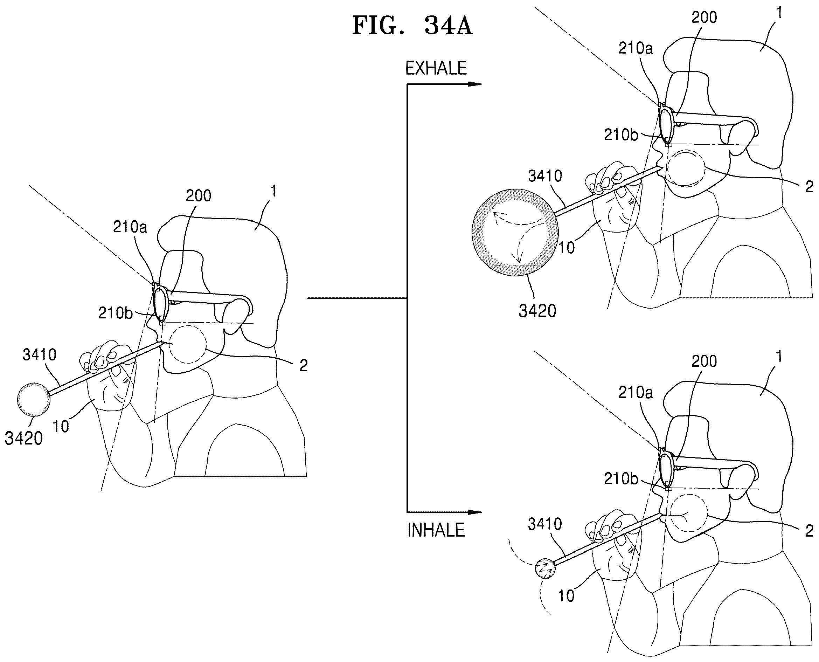

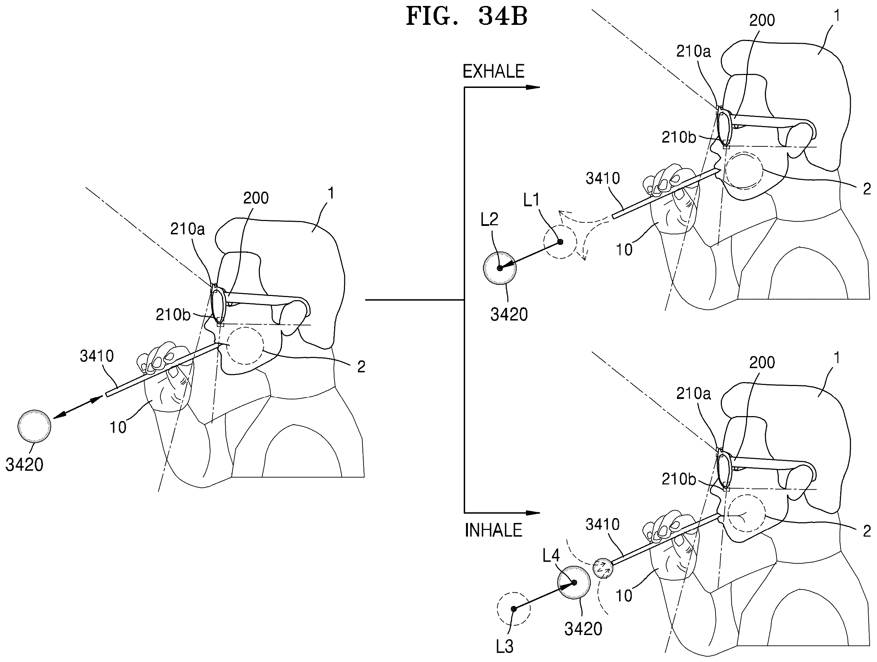

FIG. 34A is a conceptual diagram for describing a method of performing a function for controlling a virtual object based on a motion of a cheek of the user 1 or a shape of the cheek of the user 1, according to an embodiment of the present disclosure. Redundant descriptions overlapping what are described in FIGS. 1 to 33 will be omitted. For convenience of explanation, FIGS. 34A and 34B will be described with reference to FIG. 2.

Referring to FIGS. 34A and 34B, the electronic device 200 may obtain an image by photographing a real object 3410 and the hand 10 of the user 1 in a real space by using the first camera 210a. The electronic device 200 may recognize the real object 3410 interacting with the hand 10 of the user 1 from the obtained image. For example, the electronic device 200 may recognize the hand 10 of the user 1 gripping the real object 3410 from the obtained image. The electronic device 200 may generate a virtual object 3420 based on a result of the recognizing. For example, the virtual object 3420 may have the shape of a bubble, but the present disclosure is not limited thereto, and the shape of the virtual object 3420 may be determined in advance according to a setting of the user or manufacturer.

In an embodiment of the present disclosure, the electronic device 200 may activate the second camera 210b based on a result of the recognizing, but the present disclosure is not limited thereto, and the second camera 210b may have already been activated. The electronic device 200 may use the second camera 210b to obtain an image by photographing the cheek 2 of the user 1. The electronic device 200 may detect a motion of the cheek 2 of the user 1 or a shape of the cheek 2 of the user 1 from the obtained image. The electronic device 200 may recognize inhaling or exhaling of the user 1 by detecting a motion of the cheek 2 of the user 1 or a shape of the cheek 2 of the user 1.

Referring to FIG. 34A, the virtual object 3420 may come in contact with one end of the real object 3410. In an embodiment of the present disclosure, the electronic device 200 may detect exhaling of the user 1. In an embodiment of the present disclosure, the electronic device 200 may detect a puff-out motion of the cheek 2 of the user 1. In an embodiment of the present disclosure, the electronic device 200 may detect a puffed-out shape of the cheek 2 of the user 1. The electronic device 200 may enlarge the size of the virtual object 3420 based on a result of the detecting.

In an embodiment of the present disclosure, the electronic device 200 may recognize inhaling of the user 1. In an embodiment of the present disclosure, the electronic device 200 may detect a suck-in motion of the cheek 2 of the user 1. In an embodiment of the present disclosure, the electronic device 200 may detect a sucked-in shape of the cheek 2 of the user 1. The electronic device 200 may reduce the size of the virtual object 3420 based on a result of the detecting.

Referring to FIG. 34B, the virtual object 3420 may be spaced apart from the one end of the real object 3410 by a predefined distance. In an embodiment of the present disclosure, the electronic device 200 may detect exhaling of the user 1. In an embodiment of the present disclosure, the electronic device 200 may detect a puff-out motion of the cheek 2 of the user 1. In an embodiment of the present disclosure, the electronic device 200 may detect a puffed-out shape of the cheek 2 of the user 1. Based on a result of the detecting, the electronic device 200 may move the virtual object 3420 so that the distance between the virtual object 3420 and the real object 3410 increases. For example, the virtual object 3420 may be moved from a first location L1 to a second location L2. The first location L1 may be closer to the real object 3410 than the second location L2 is.

In an embodiment of the present disclosure, the electronic device 200 may detect inhaling of the user 1. In an embodiment of the present disclosure, the electronic device 200 may detect a suck-in motion of the cheek 2 of the user 1. In an embodiment of the present disclosure, the electronic device 200 may detect a sucked-in shape of the cheek 2 of the user 1. Based on a result of the detecting, the electronic device 200 may move the virtual object 3420 so that the distance between the virtual object 3420 and the real object 3410 decreases. For example, the virtual object 3420 may be moved from a third location L3 to a fourth location L4. The third location L3 may be farther from the real object 3410 than the fourth location L4 is. In an embodiment of the present disclosure, the electronic device 200 may express the motion of the virtual object 3420 in virtual reality through animation.

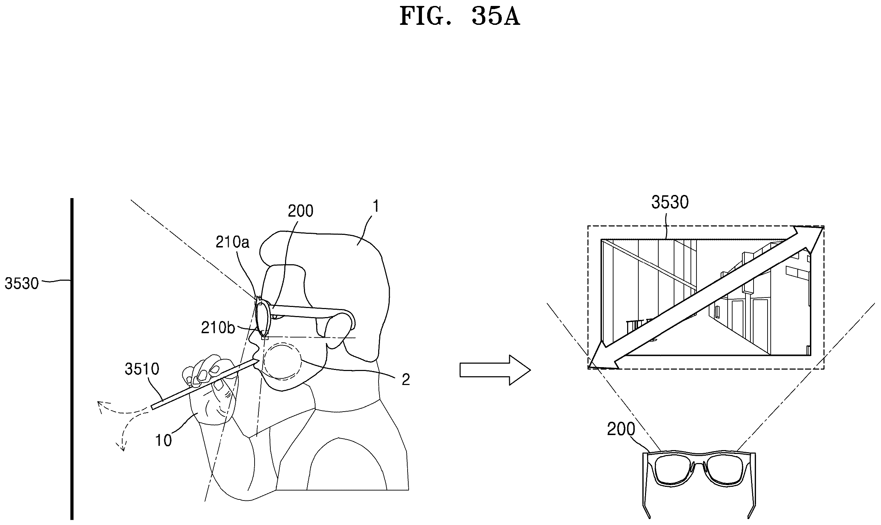

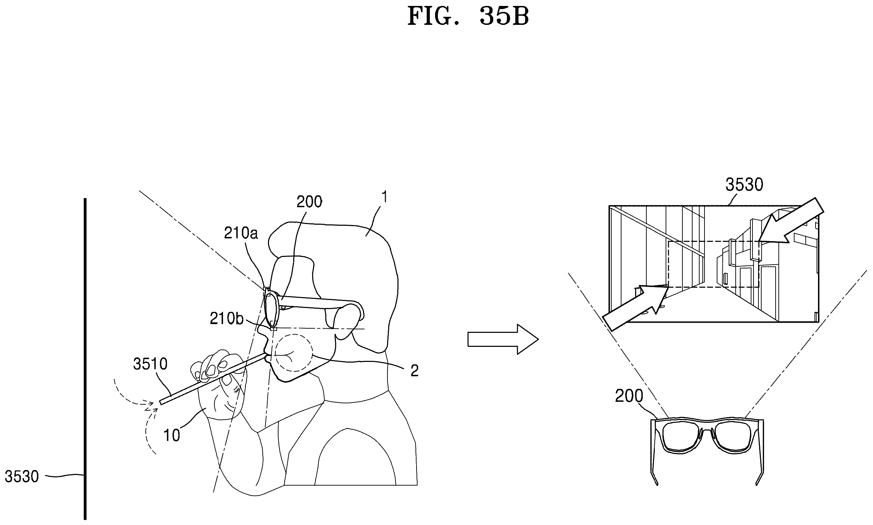

FIGS. 35A and 35B are conceptual diagrams for describing a method of performing a function for controlling the size of a virtual screen based on a motion of the cheek 2 of the user 1 or a shape of the cheek 2 of the user 1, according to an embodiment of the present disclosure. Redundant descriptions overlapping what are described in FIGS. 1 to 34B will be omitted. For convenience of explanation, FIGS. 35A and 35B will be described with reference to FIG. 2.

Referring to FIGS. 35A and 35B, the electronic device 200 may display a virtual screen 3530 in a virtual space. The electronic device 200 may detect a motion of the cheek 2 of the user 1 or a shape of the cheek 2 of the user 1. The electronic device 200 may adjust the size of the virtual screen 3530 based on the motion of the cheek 2 of the user 1 or the shape of the cheek 2 of the user 1.

Referring to FIG. 35A, the electronic device 200 may detect exhaling of the user 1. In an embodiment of the present disclosure, the electronic device 200 may detect a puff-out motion of the cheek 2 of the user 1. In an embodiment of the present disclosure, the electronic device 200 may detect a puffed-out shape of the cheek 2 of the user 1. The electronic device 200 may enlarge the size of the virtual screen 3530 based on a result of the detecting.

Referring to FIG. 35B, the electronic device 200 may detect inhaling of the user 1. In an embodiment of the present disclosure, the electronic device 200 may detect a suck-in motion of the cheek 2 of the user 1. In an embodiment of the present disclosure, the electronic device 200 may detect a sucked-in shape of the cheek 2 of the user 1. The electronic device 200 may reduce the size of the virtual screen 3530 based on a result of the detecting.

Unlike what are depicted in FIGS. 35A and 35B, the electronic device 200 may adjust the position of the virtual screen 3530 based on the result of the detecting. For example, the electronic device 200 may move the position of the virtual screen 3530 to be away from the electronic device 200 based on the puff-in motion of the cheek 2 of the user 1 or the puffed-in shape of the cheek 2 of the user 1. For example, the electronic device 200 may move the position of the virtual screen 3530 to be close to the electronic device 200 based on the suck-in motion of the cheek 2 of the user 1 or the sucked-in shape of the cheek 2 of the user 1.

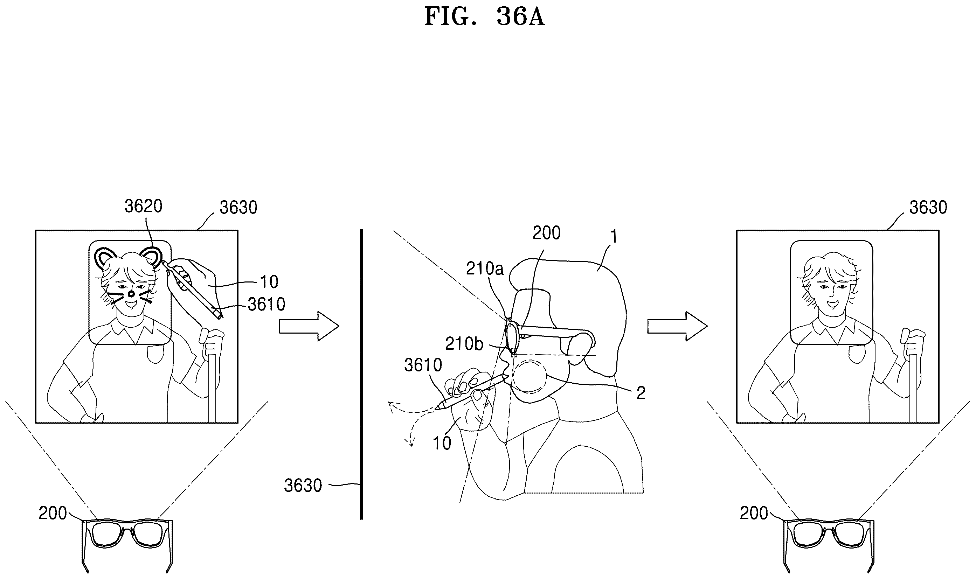

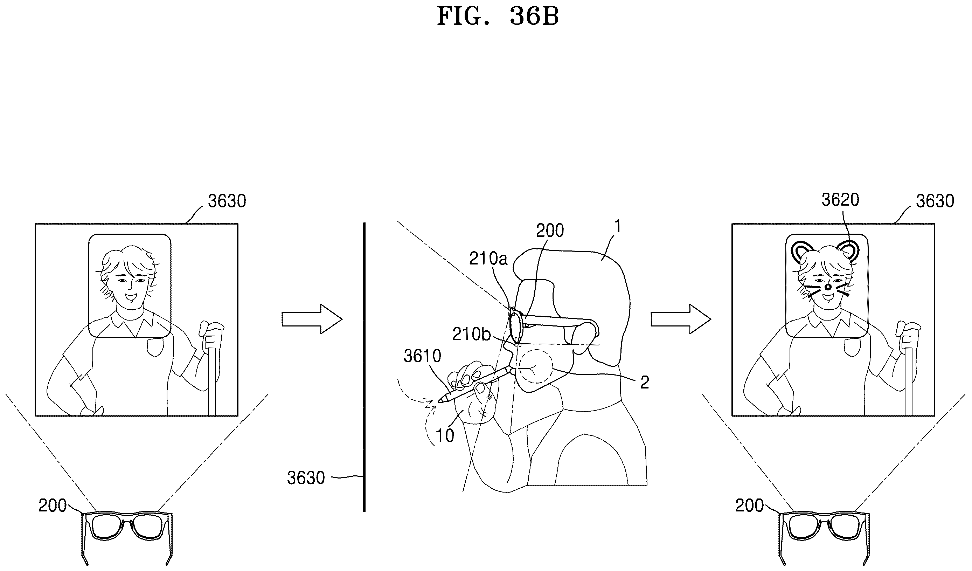

FIGS. 36A and 36B are conceptual diagrams for describing a method of performing a pre-identified function or a function for undoing the performed function based on a motion of a user's cheek or a shape of the user's cheek, according to an embodiment of the present disclosure. Redundant descriptions overlapping what are described in FIGS. 1 to 35B will be omitted. For convenience of explanation, FIGS. 36A and 36B will be described with reference to FIG. 2.

Referring to FIG. 36A, the electronic device 200 may display an image edit window 3630 through the display 244. As depicted in FIGS. 4A to 20, the electronic device 200 may obtain an image by photographing a real object 3610 and the hand 10 of the user 1 in a real space. The electronic device 200 may recognize the real object 3610 interacting with the hand 10 of the user 1 from the obtained image. The electronic device 200 may use the recognized real object 3610 as an input tool to identify a function for generating a virtual object 3620. The electronic device 200 may generate the virtual object 3620 based on the motion of at least a portion (e.g., a pencil tip) of the real object 3610. In an embodiment of the present disclosure, the electronic device 200 may generate a virtual object 3620 on a target image displayed in the image edit window 3630.

The electronic device 200 may obtain (measure or estimate) a distance between the real object 3610 and the user's mouth. The electronic device 200 may determine whether the distance between the real object 3610 and the user's mouth is smaller than or equal to a predefined threshold. Based on determining that the distance between the real object 3610 and the user's mouth is smaller than or equal to the predefined threshold, the electronic device 200 may determine to use the real object 3610 as an input tool to perform a pre-registered function.

The electronic device 200 may use the second camera 210b to obtain an image taken of the cheek 2 of the user 1. In an embodiment of the present disclosure, based on determining to use the real object 3310 as an input tool to perform the pre-registered function, the electronic device 200 may activate the second camera 210b.

The electronic device 200 may detect an exhaling (expiratory) operation while the user 1 brings the real object 3610 close to the mouth of the user 1. In an embodiment of the present disclosure, the electronic device 200 may detect the motion of the cheek 2 of the user 1 or the shape of the cheek 2 of the user 1 from the image. The electronic device 200 may detect a puff-out motion of the cheek 2 of the user 1 or a puffed-out shape of the cheek 2 of the user 1. The electronic device 200 may delete the virtual object 3620 based on the puff-out motion of the cheek 2 of the user 1 or the puffed-out shape of the cheek 2 of the user 1. For example, the electronic device 200 may delete all the virtual objects 3620 generated on the target image in the image edit window 3630 based on the puff-out motion of the cheek 2 of the user 1 or the puffed-out shape of the cheek 2 of the user 1.

Referring to FIG. 36B, the electronic device 200 may display the image edit window 3630 through the display 244. The electronic device 200 may detect an inhaling (inspiratory) operation while the user 1 brings the real object 3610 close to the mouth of the user 1. In an embodiment of the present disclosure, the electronic device 200 may detect the motion of the cheek 2 of the user 1 or the shape of the cheek 2 of the user 1 from the image. The electronic device 200 may detect a suck-in motion of the cheek 2 of the user 1 or a sucked-in shape of the cheek 2 of the user 1. The electronic device 200 may undo the performed function based on the suck-in motion of the cheek 2 of the user 1 or the sucked-out shape of the cheek 2 of the user 1. For example, the electronic device 200 may undo the function for deleting the virtual object 3620.

In an embodiment of the present disclosure, based on the undoing, the electronic device 200 may generate the virtual object 3620 on the target image. For example, when performing the function for deleting the virtual object 3620 generated in the previous operation, the electronic device 200 may store information about the virtual object 3620 in the memory 260 (e.g., a buffer memory). The electronic device 200 may load the information about the virtual object 3620 stored in the memory based on the suck-in motion of the cheek 2 of the user 1 or the sucked-in shape of the cheek 2 of the user 1. Based on the loaded information about the virtual object 3620, the electronic device 200 may generate the virtual object 3620 on the target image.

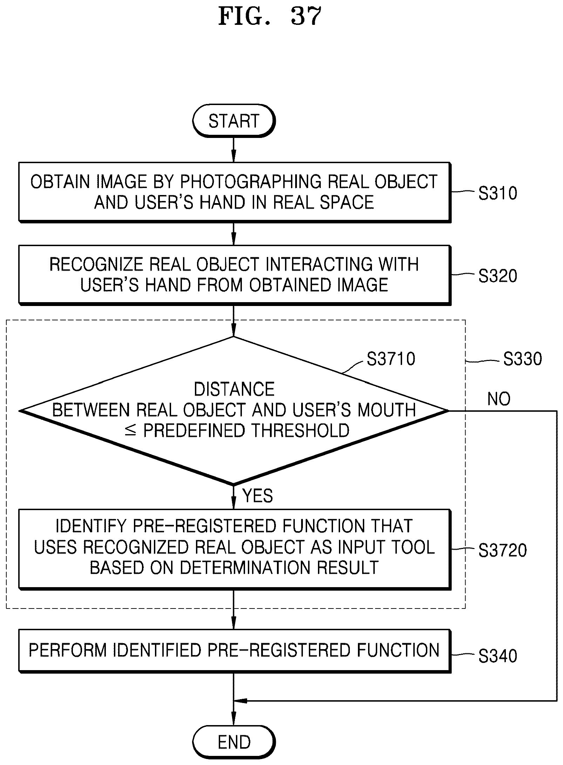

FIG. 37 is a flowchart showing a method of identifying a pre-registered function based on a distance between a real object and a user's mouth, according to an embodiment of the present disclosure. Redundant descriptions overlapping what are described in FIGS. 1 to 36B will be omitted. For convenience of explanation, FIG. 37 will be described with reference to FIGS. 2 and 3.

Referring to FIG. 37, operation S330 of FIG. 3 may include operations S3710 and S3720. In an embodiment of the present disclosure, operations S3710 and S3720 may be performed by the electronic device 200 or the processor 250 of the electronic device 200. Detailed operations of operation S340 according to the present disclosure are not limited to what is depicted in FIG. 37, and one of the operations depicted in FIG. 37 may be omitted or an operation not depicted in FIG. 37 may further be included.

In operation S3710, the electronic device 200 may determine whether the distance between the real object and the user's mouth is smaller than or equal to a predefined threshold. In an embodiment of the present disclosure, the electronic device 200 may measure a distance between the real object and the user's mouth based on an obtained image and/or sensor data (e.g., a depth value). When the distance between the real object and the user's mouth is larger than the predefined threshold, the procedure ends. When the distance between the real object and the user's mouth is smaller than or equal to the predefined threshold, the procedure goes to operation S3720.

In operation S3720, based on determining that the distance between the real object and the user's mouth is smaller than or equal to the predefined threshold, the electronic device 200 may identify a pre-registered function that uses the recognized real object as an input tool. For example, the pre-registered function may be a function for identifying and performing a pre-registered sub-function based on the shape or motion of the cheek of the user. The disclosure is not, however, limited thereto, and the pre-registered function may include a first sub-function and a second sub-function. For example, the first sub-function may be a function for generating a virtual object. For example, the second sub-function may be a function for controlling the virtual object generated by the first sub-function based on the shape or motion of the cheek of the user.

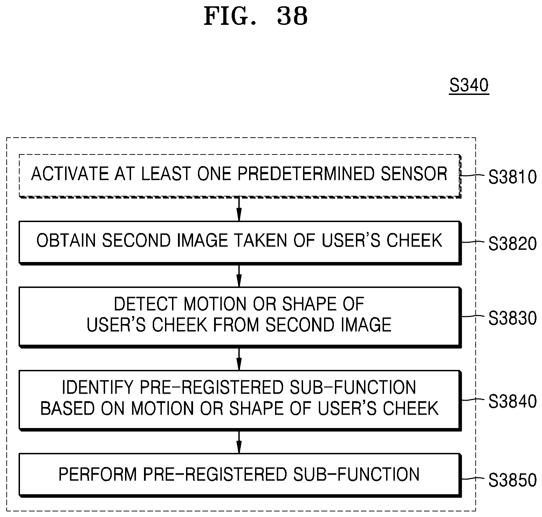

FIG. 38 is a flowchart showing a method of performing a pre-registered function based on a motion of a user's cheek or a shape of the user's cheek, according to an embodiment of the present disclosure. Redundant descriptions overlapping what are described in FIGS. 1 to 37 will be omitted. For convenience of explanation, FIG. 38 will be described with reference to FIGS. 2 and 3.

Referring to FIG. 38, operation S340 of FIG. 3 may include operations S3810 to S3850. In an embodiment of the present disclosure, operations S3810 to S3850 may be performed by the electronic device 200 or the processor 250 of the electronic device 200. Detailed operations of operation S340 according to the present disclosure are not limited to what is depicted in FIG. 38, and one of the operations depicted in FIG. 38 may be omitted or an operation not depicted in FIG. 38 may further be included.

In operation S3810, the electronic device 200 may activate at least one predetermined sensor based on an identification result. For example, the electronic device 200 may include a first camera and a second camera. For example, the first camera may obtain a first image by photographing a real object and the hand 10 of the user in a real space. For example, the second camera may obtain a second image by photographing a cheek of the user. The electronic device 200 may activate the second camera based on the identification result. The present disclosure is not, however, limited thereto, and the second camera may be omitted while the first camera may photograph the cheek of the user, or the second camera may have already been activated. In an embodiment of the present disclosure, operation S3810 may be omitted.

In operation S3820, the electronic device 200 may obtain a second image taken of the cheek of the user. In an embodiment of the present disclosure, the electronic device 200 may capture the image of the cheek of the user by using at least one of the first camera and the second camera.

In operation S3830, the electronic device 200 may detect a motion of the cheek of the user from the second image. In an embodiment of the present disclosure, the electronic device 200 may detect a shape of the cheek of the user from the second image. For example, the electronic device 200 may detect a puff-out or suck-in motion (or a puffed-out or sucked-in shape) of the cheek of the user from the second image.

In operation S3840, the electronic device 200 may identify a pre-registered sub-function based on the motion or shape of the cheek of the user. For example, the pre-registered sub-function may include at least one of a function for controlling a virtual object, e.g., controlling the size or position of the virtual object, a function for controlling a virtual screen (or also referred to as a virtual window), e.g., controlling the size or position of the virtual screen, a function for deleting a virtual object, a function for undoing the performed function and a function for redoing the undone function. In an embodiment of the present disclosure, a sub-function corresponding to a motion or shape of the cheek of the user may be registered in advance. In an embodiment of the present disclosure, the first sub-function corresponding to the puff-out motion (or puffed-out shape) of the cheek of the user and the second sub-function corresponding to the suck-in motion (or sucked-out shape) of the cheek of the user may be mapped as a function pair.

In operation 3850, the electronic device 200 may perform a pre-registered sub-function.

In an embodiment of the present disclosure, an electronic device may be provided. The electronic device may include a camera for obtaining an image by photographing a real-world object (hereinafter, also referred to as a real object) and a user's hand in a real space. The electronic device may include memory storing at least one instruction. The electronic device may include at least one processor configured to execute the at least one instruction stored in the memory. The at least one processor may recognize the real object interacting with the user's hand from the obtained image. The at least one processor may identify a pre-registered function which uses the recognized real object as an input tool. The at least one processor may perform the identified pre-registered function.

In an embodiment of the present disclosure, the at least one processor may detect the real object from the obtained image. The at least one processor may divide the detected real object into a plurality of portions. The at least one processor may detect at least one portion occluded by the user's hand from among the plurality of portions. The pre-registered function may be identified based on the at least one occluded portion.

In an embodiment of the present disclosure, the at least one processor may detect the real object from the obtained image. The at least one processor may divide the detected real object into a plurality of portions. The at least one processor may determine a position in which the user's hand is gripping the real object based on a result of the dividing. The at least one processor may identify the pre-registered function based on the determined position.

In an embodiment of the present disclosure, the at least one processor may determine a gripping direction indicating toward which portion of the plurality of portions the user's hand is gripping the real object. The at least one processor may identify the pre-registered function based on the determined gripping direction.

In an embodiment of the present disclosure, the at least one processor may detect the real object from the obtained image. The at least one processor may divide the detected real object into a plurality of portions. The at least one processor may recognize a motion of the user's hand touching at least one of the plurality of portions. The at least one processor may identify the pre-registered function based on the recognized motion.

In an embodiment of the present disclosure, the at least one processor may track the motion of the real object based on the obtained image. The at least one processor may perform a function for generating or deleting a virtual object based on the tracked motion.

In an embodiment of the present disclosure, the at least one processor may recognize at least one of a color and a size of at least a portion of the real object from the obtained image. The at least one processor may determine at least one of a color and a size of the virtual object based on at least one of the color and the size of the at least a portion of the real object. The at least one processor may generate the virtual object having at least one of the determined color and size.

In an embodiment of the present disclosure, the at least one processor may recognize a target object indicated by the real object from the obtained image. The at least one processor may determine at least one of a color, a shape and a form of the virtual object based on at least one of a color, a shape and a form of the target object. The at least one processor may generate the virtual object having at least one of the determined color, shape and form.

In an embodiment of the present disclosure, the at least one processor may use an Al model having a virtual image corresponding to the virtual object as an input to classify the virtual object. The at least one processor may determine a color pre-mapped to a result of the classifying as a color of the virtual object. The at least one processor may generate the virtual object having the determined color.

In an embodiment of the present disclosure, the pre-registered function may be registered by recognizing the real object from the image, registering the recognized real object as the input tool, and mapping an interaction between the registered real object and the user's hand to a predefined function.

In an embodiment of the present disclosure, the at least one processor may measure a distance between the user's hand and the real object. When the distance does not exceed a predefined threshold, the at least one processor may determine to use the recognized real object as an input tool. When the distance exceeds the predefined threshold, the at least one processor may determine not to use the recognized real object as an input tool.

In an embodiment of the present disclosure, the at least one processor may perform a function for determining a performance value of the virtual object based on at least one of a color, a texture and a shape of the recognized real object, a shape of the user's hand and a position of the user' hand.

In an embodiment of the present disclosure, the at least one processor may detect a motion of the recognized real object. The at least one processor may determine whether the detection motion is a predetermined motion. The at least one processor may perform a function for generating a predetermined virtual object based on determining that the detected motion is the predetermined motion.

In an embodiment of the present disclosure, the at least one processor may activate an authentication mode for requesting a personal authentication input based on determining that the motion of the recognized real object is the predetermined motion. The at least one processor may obtain the personal authentication input. The at least one processor may generate the predetermined virtual object in response to the personal authentication input. The at least one processor may display, on a display, the predetermined virtual object.

In an embodiment of the present disclosure, the at least one processor may activate at least one predetermined sensor.

In an embodiment of the present disclosure, an electronic device may be provided. The electronic device may include a camera for obtaining an image by photographing a real object in a real space. The electronic device may include memory storing at least one instruction. The electronic device may include at least one processor configured to execute the at least one instruction stored in the memory. The at least one processor may recognize the real object from the obtained image. The at least one processor may register the recognized real object as an input tool. The at least one processor may map an interaction between the registered real object and a user's hand to a predefined function.

In an embodiment of the present disclosure, a method of using a real object as an input tool of an electronic device may be provided. The method may include obtaining an image by photographing a real object and a user's hand in a real space. The method may include recognizing the real object interacting with the user's hand from the obtained image. The method may include identifying a pre-registered function which uses the recognized real object as an input tool. The method may include performing the identified pre-registered function.

In an embodiment of the disclosure, a computer-readable recording medium having a program recorded thereon to cause a computer to perform the method of using a real object as an input tool of an electronic device.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a CD-ROM) or distributed directly between two user devices (e.g., smart phones) or online (e.g., downloaded or uploaded). In the case of the online distribution, at least part of the computer program product (e.g., a downloadable app) may be at least temporarily stored or arbitrarily created in a storage medium that may be readable to a device such as a server of the manufacturer, a server of the application store, or a relay server.

## Claims

1. An electronic device (200) comprising:
a camera (210) configured to obtain an image by photographing a real object and a user's hand in a real space;
memory (260) storing at least one instruction; and
at least one processor (250) configured to execute the at least one instruction stored in the memory, wherein the at least one processor (250) is configured to:
recognize the real object interacting with the user's hand from the obtained image,
identify a pre-registered function which uses the recognized real object as an input tool, and
perform the identified pre-registered function.

2. The electronic device (200) of claim 1, wherein the at least one processor (250) is configured to:
detect the real object from the obtained image,
divide the detected real object into a plurality of portions,
detect at least one portion occluded by the user's hand from among the plurality of portions, and
identify the pre-registered function based on the at least one occluded portion.

3. The electronic device (200) of any one of claims 1 and 2, wherein the at least one processor (250) is configured to:
detect the real object from the obtained image,
divide the detected real object into a plurality of portions,
determine a position in which the user's hand is gripping the real object based on a result of the dividing, and
identify the pre-registered function based on the determined position.

4. The electronic device (200) of any one of claims 2 and 3, wherein the at least one processor (250) is configured to:
determine a gripping direction indicating toward which one of the plurality of portions the user's hand is gripping the real object, and
identify the pre-registered function based on the determined gripping direction.

5. The electronic device (200) of any one of claims 1 to 4, wherein the at least one processor (250) is configured to:
detect the real object from the obtained image,
divide the detected real object into a plurality of portions,
recognize a motion of the user's hand touching at least one of the plurality of portions, and
identify the pre-registered function based on the recognized motion.

6. The electronic device (200) of any one of claims 1 to 5, wherein the at least one processor (250) is configured to:
track a motion of the real object based on the obtained image, and
perform a function for generating or deleting a virtual object based on the tracked motion.

7. The electronic device (200) of claim 6, wherein the at least one processor (250) is configured to:
recognize at least one of a color and a size of at least a portion of the real object from the obtained image,
determine at least one of a color and a size of the virtual object based on at least one of the color and the size of the at least a portion of the real object, and
generate the virtual object having at least one of the determined color and size.

8. The electronic device (200) of any one of claims 6 and 7, wherein the at least one processor (250) is configured to:
recognize a target object indicated by the real object from the obtained image,
determine at least one of a color, a shape and a form of the virtual object based on at least one of a color, a shape and a form of the target object, and
generate the virtual object having at least one of the determined color, shape and form.

9. The electronic device (200) of any one of claims 6 to 8, wherein the at least one processor (250) is configured to:
classify the virtual object by using an artificial intelligence model having a virtual image corresponding to the virtual object as an input,
determine a color mapped to a result of the classifying as a color of the virtual object, and
generate the virtual object having the determined color.

10. The electronic device (200) of any one of claims 1 to 9, wherein the pre-registered function is registered by recognizing the real object from the image, registering the recognized real object as the input tool, and mapping an interaction between the registered real object and the user's hand to a predefined function.

11. A method of using a real object as an input tool of an electronic device, the method comprising:
obtaining an image by photographing a real object and a user's hand in a real space (S310);
recognizing the real object interacting with the user's hand from the obtained image (S320);
identifying a pre-registered function which uses the recognized real object as an input tool (S330); and
performing the identified pre-registered function (S340).

12. The method of claim 11, wherein:
the recognizing of the real object interacting with the user's hand from the obtained image (S320) comprises:
detecting the real object from the obtained image;
dividing the detected real object into a plurality of portions; and
detecting at least one portion occluded by the user's hand from among the plurality of portions, and
the identifying of the pre-registered function which uses the recognized real object as the input tool (S330) comprises identifying the pre-registered function based on the at least one occluded portion.

13. The method of any one of claims 11 and 12, wherein:
the recognizing of the real object interacting with the user's hand from the obtained image (S320) comprises:
detecting the real object from the obtained image;
dividing the detected real object into a plurality of portions; and
determining a position in which the user's hand is gripping the real object based on a result of the dividing, and
the identifying of the pre-registered function which uses the recognized real object as the input tool (S330) comprises identifying the pre-registered function based on the determined position.

14. The method of any one of claims 12 and 13, wherein:
the recognizing of the real object interacting with the user's hand from the obtained image (S320) comprises determining a gripping direction indicating toward which one of the plurality of portions the user's hand is gripping the real object, and
the identifying of the pre-registered function which uses the recognized real object as the input tool (S330) comprises identifying the pre-registered function based on the determined gripping direction.

15. A computer-readable recording medium having a program recorded thereon to cause a computer to perform the method of any one of claims 11 to 14.
